# EUROPEAN PATENT SPECIFICATION

(11) **EP 4 555 699 B1**
(45) Date of publication and mention of the grant of the patent: **11.11.2026**
(21) Application number: 22753634.9
(22) Date of filing: 15.07.2022
(51) Int. Cl.: H04L 65/1016, H04L 61/4588, H04L 65/1083

(54) **DISTRBUTOR FUNCTION, LOCATOR FUNCTION AND METHODS IN A COMMUNICATIONS NETWORK**
VERTEILUNGSFUNKTION, ORTUNGSFUNKTION UND VERFAHREN IN EINEM KOMMUNIKATIONSNETZ
FONCTION DISTRIBUTRICE, FONCTION LOCALISATRICE ET PROCÉDÉS DANS UN RÉSEAU DE COMMUNICATION

(43) Date of publication of application: 21.05.2025
(73) Proprietor: Telefonaktiebolaget LM Ericsson (publ), 164 83 Stockholm (SE)
(72) Inventor: SURDILA, Sorin, Laval, Québec H7X 4B4 (CA); HEGARTY, Charles, 168 53 Stockholm (SE); ANULF, Andreas, 181 31 LIDINGÖ (SE); ABTIN, Afshin, 191 37 Sollentuna (SE)
(74) Representative: Ericsson
(86) International application number: PCT/EP2022/069845
(87) International publication number: WO 2024/012689

(56) References cited:
- ERICSSON: "Common Network Exposure", vol. SA WG2, no. Electronic Meeting; 20200420 - 20200424, 18 June 2020 (2020-06-18), XP051900258, Retrieved from the Internet <URL:https://ftp.3gpp.org/3guInternal/3GPP_Ultimate_CRPacks/SP-200437.zip 23502_CR2178_(Rel-16)_S2-2002713-Common-network-exposure-23502-PA4.docx> [retrieved on 20200618]

## Description

### TECHNICAL FIELD

Embodiments herein relate to a locator function, a distributor function and methods therein. In some aspects, they relate to handling subscriptions to expose IMS exposure data in a communications network.

### BACKGROUND

In a typical wireless communication network, wireless devices, also known as wireless communication devices, mobile stations, stations (STA) and/or User Equipments (UE), communicate via a Wide Area Network or a Local Area Network such as a Wi-Fi network or a cellular network comprising a Radio Access Network (RAN) part and a Core Network (CN) part. The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

3GPP is the standardization body for specify the standards for the cellular system evolution, e.g., including 3G, 4G, 5G and the future evolutions. Specifications for the Evolved Packet System (EPS), also called a Fourth Generation (4G) network, have been completed within the 3rd Generation Partnership Project (3GPP). As a continued network evolution, the new releases of 3GPP specifies a 5G network also referred to as 5G New Radio (NR).

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

The Internet protocol Multimedia Subsystem (IMS) is a well-known 3GPP standard allowing sessions to be set up between two or more parties for a broad variety of services such as voice or video call, interactive messaging sessions or third party specific applications. A protocol chosen by 3GPP is the Session Initiation Protocol (SIP). SIP provides a mechanism for the registration of UEs and for setting up multimedia sessions. The SIP REGISTER method enables the registration of user agent's current location and the INVITE method enables the setting up of a session. IMS is being implemented by Public Land Mobile Network (PLMN) operators as an architectural framework for delivering IP multimedia services to their subscribers.

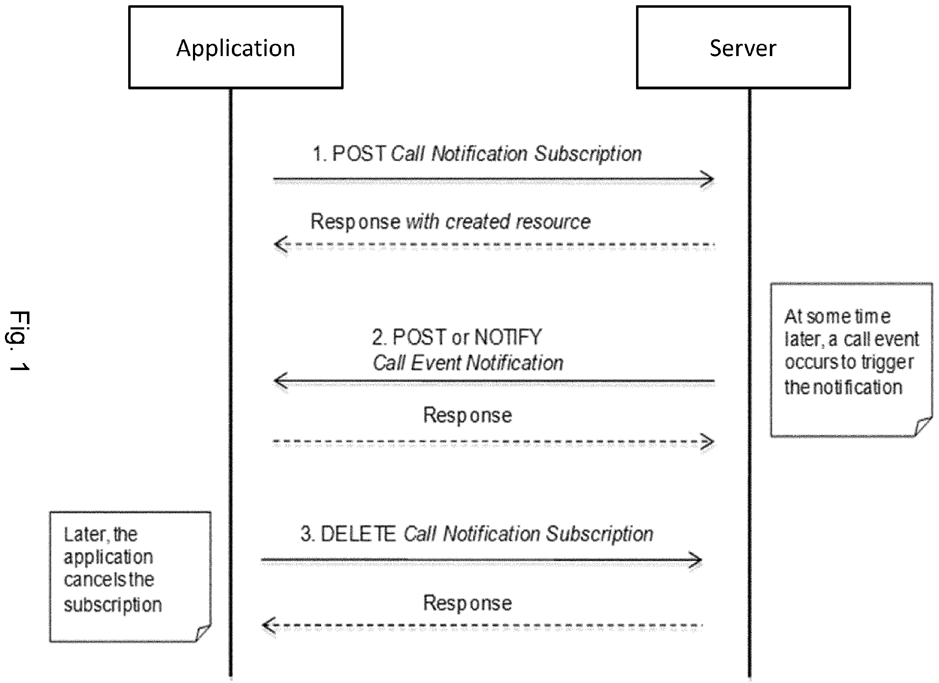

Open Mobile Alliance (OMA) and Global System for Mobile communications Association (GSMA) have specified a Restful based Application Programming Interface (API) for managing event subscriptions for Call Notifications, Call Direction Notifications and Media Interaction Notifications (CallNotification-V1_0-20190510-D). An application may subscribe, via the API, to a server to provide notifications of certain call events, e.g., "call busy". When the event which satisfies the specified criteria occurs, the server notifies the application, as shown in Figure 1.

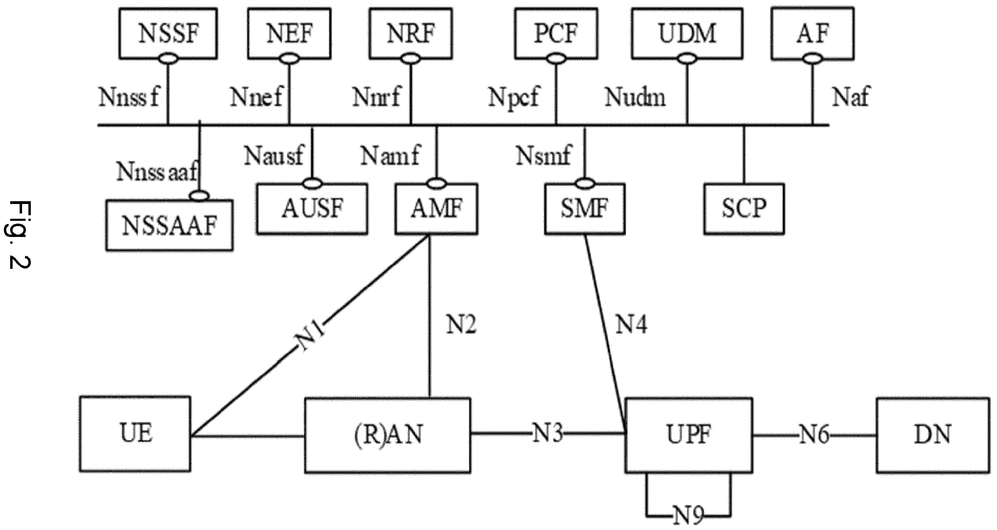

A Service Based Architecture (SBA) was defined in 3GPP Release 15 for 5GC and has evolved in 3GPP Release 16. Figure 2 shows a 5G system architecture from 3GPP TS 23.501 on 5GC SBA using Service Based Interfaces (SBI) within the control plane.

NSSF means Network Slicing Selection Function.

NEF means Network Exposure Function.

NRF means Network Repository Function.

PCF means Policy Control Function.

UDM means Unified Data Management.

AF means Application Function.

NSSAAF means Network Slice-Specific Authentication and Authorization Function.

AUSF means Authentication Server Function.

AMF means Access and Mobility Function.

SMF means Session Management Function.

SCP means Service Communication Proxy.

UPF means User Plane Control Function.

DN means Data Network.

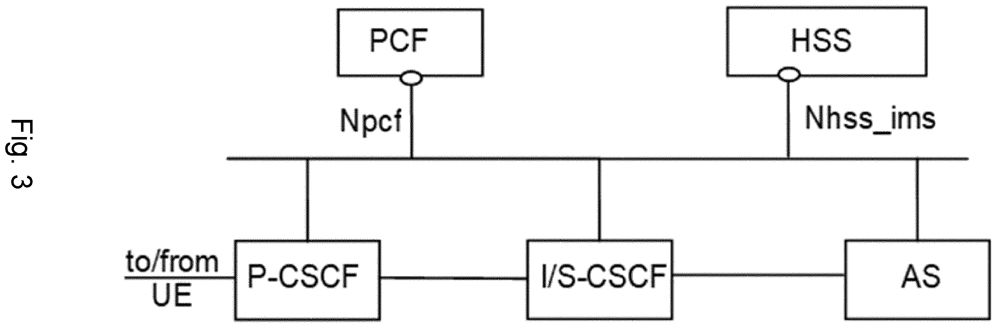

In 3GPP Release 16, IMS interfaces to 5GC were also defined as SBIs. Figure 3 shows the IMS interfaces that are specified with services from 3GPP TS 23.228.

According to current procedures in IMS, at IMS Registration, a Serving Call Session Control Function (S-CSCF) will have interaction with an IMS Home Subscriber Server (HSS) and register itself as serving S-CSCF instance for a subscriber. While an IMS Application Server (AS) has HSS interactions, it does not create any binding information in HSS and only downloads subscriber profiles from the HSS.

P-CSCF means Proxy Call Session Control Function.

I-CSCF means Interrogating/Serving Call Session Control Function.

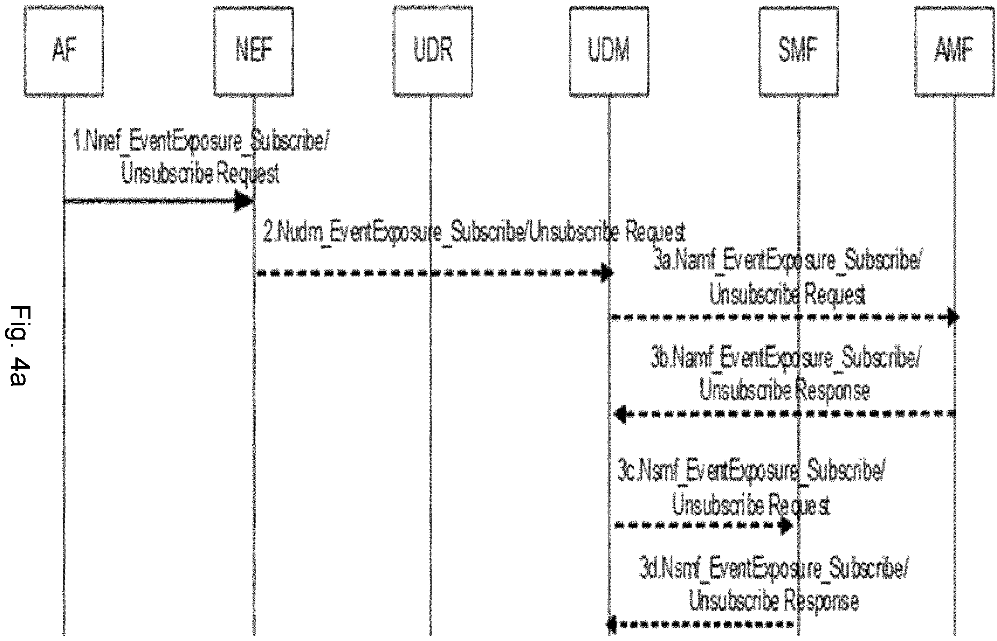

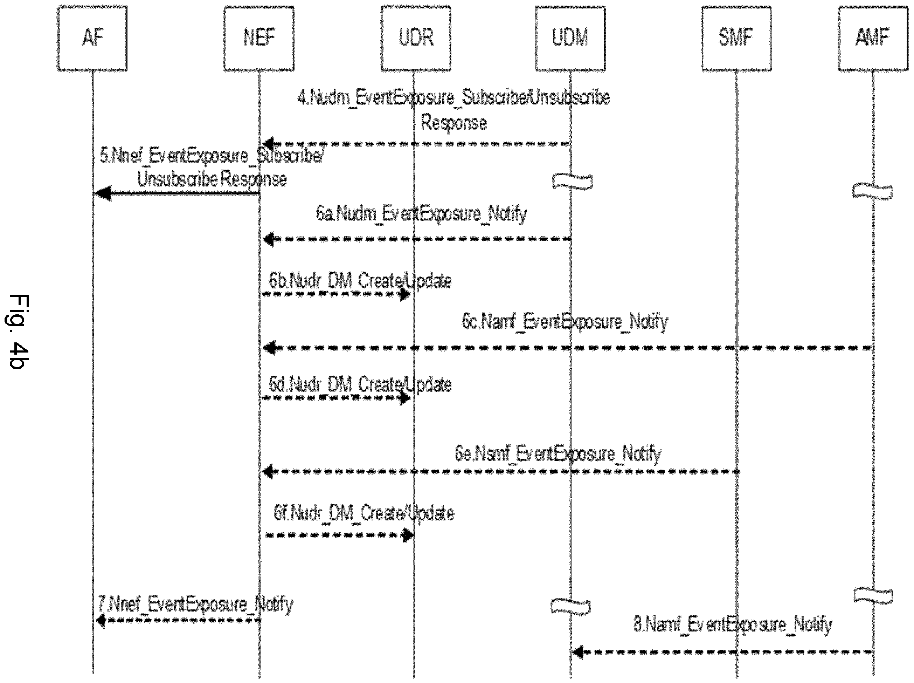

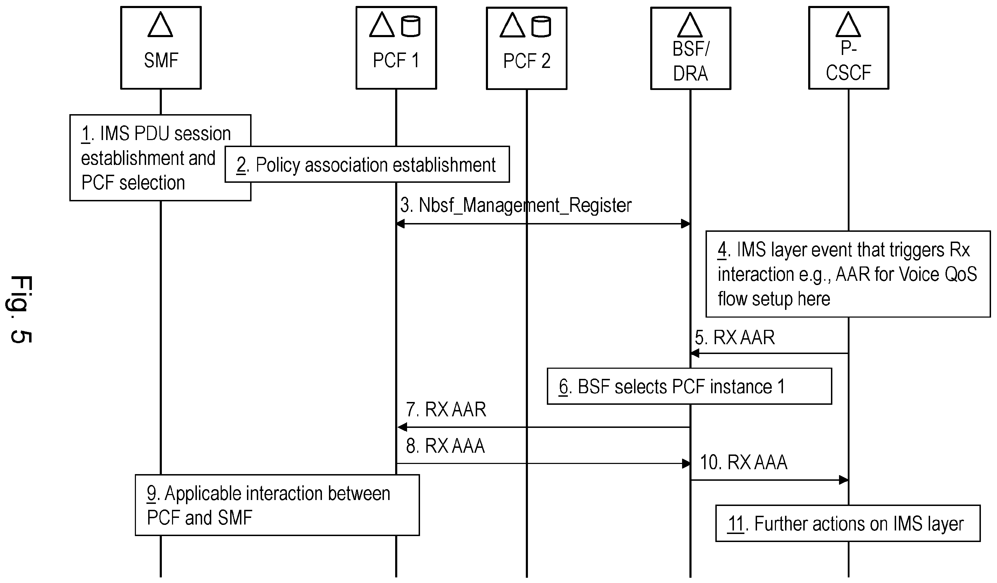

Based on the architecture shown in Figure 2, 5GC has specified detailed procedures, and APIs, for management of subscription and notification of events between Network Functions (NFs) but also to external Application Functions (AFs). A service operations information flow exemplifying this from 3GPP TS 23.502 is shown in Figures 4a and 4b, where a subscription to obtain information on a specific event that occurs in the network is sent from an external AF towards a Network Exposure Function (NEF). Using standard defined procedures, the NEF via a Unified Data Management function (UDM) forwards the request to the correct NF serving this event.

UDR means Unified Data Repository.

The Binding Session Function (BSF) is defined in 5GC architecture. Currently at IMS PDU session establishment, see 3GPP TS 23.502, §4.3.2, a Policy Control Function (PCF) will be selected. The PCF will register the UE to a PCF instance ID binding in the BSF. Later on, when the UE performs IMS Registration, a Proxy CSCF (P-CSCF) will have to find same instance of the PCF as was selected during IMS PDU session establishment and thereby will query BSF before selecting PCF, as shown in Figure 5.

Ericsson: "Common network exposure", 3GPP draft, SP-200437, 18 June 2020, is a 3GPP contribution related to common network event exposure for EPC and 5GC. The contribution specifies a flow for common network event exposure via UDM. The NEF+SCEF indicates to the UDM that it requires the event reporting performed also by EPC domain, i.e. MME reporting via t6a interface, in addition to 5GC domain by requesting explicitly the monitoring in EPC.

### SUMMARY

As part of developing embodiments herein a problem was identified by the inventor and will first be discussed.

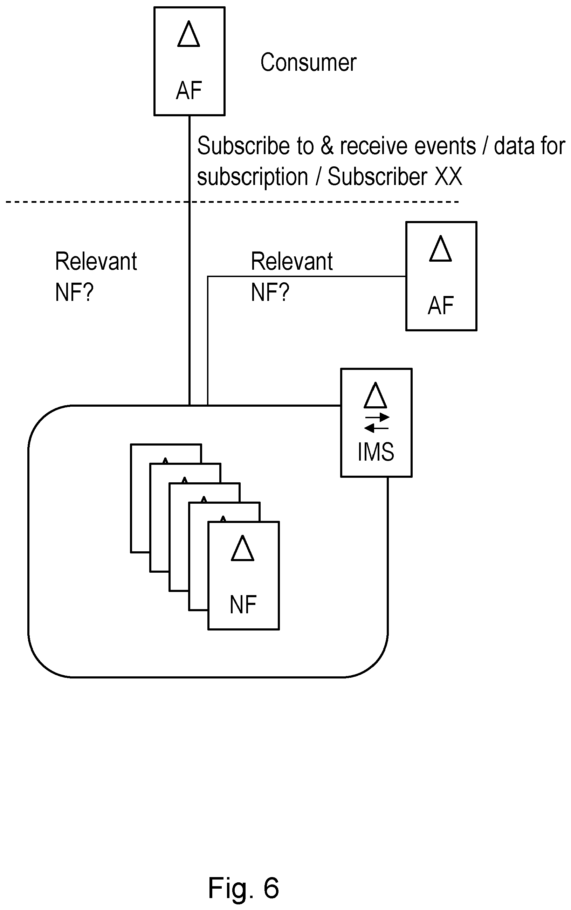

There are currently no standard defined mechanisms in IMS e.g., 3GPP TS 23.228 to dynamically locate the serving NFs that may provide specific RESTful based events/data related to specific subscribers, group of subscribers, and/or subscriptions that an AF has subscribed to, as exists today in 5GC. As mentioned above OMA and GSMA has specified as part of the RESTful OneAPI, which is implemented by some IMS vendors, suite of protocols an API for managing event subscriptions for Call Notifications, Call Direction Notifications and Media Interaction Notifications. However no guidance is provided on locating the specific server and/or NF serving the said subscriptions, as shown in Figure 6.

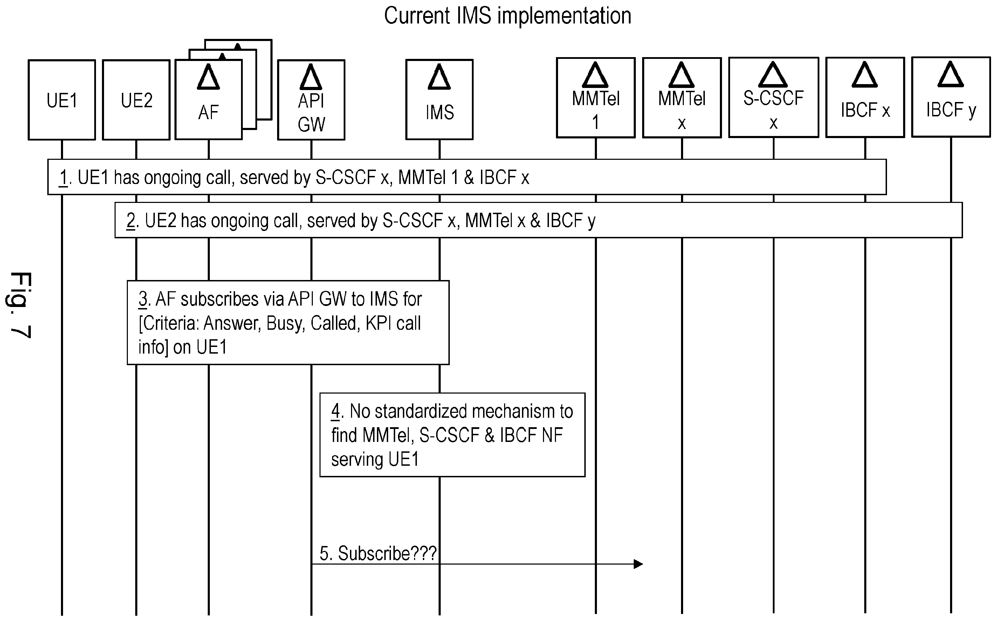

The problem is compounded further by the fact that subscription to many of these IMS exposure events, and reporting of these events, are based on short-lived sessions, e.g., Session Initiation Protocol (SIP) sessions, and may be served by different NFs and different types of NFs. To exemplify this, Figure 7 shows a case whereby an external AF, has dynamically subscribed, via an API Gateway (GW), to an event related to a specific subscriber, Subscriber 1 in Figure 7, for that subscriber's communication state, e.g., busy, idle, not registered etc., plus related KPI call state information. The subscriber is currently served by S-CSCF x, Multimedia Telephony Service (MMTel) x and Interconnection Border Control Function (IBCF) x. Information related to the requested subscribed event on Subscriber 1 requires that the NFs provide notifications to the AF. Current IMS architecture does not provide any dynamic means for the AF and/or API GW to locate the relevant NF that may provide the relevant required information.

An object of embodiments herein is to improve the performance of a communications network using exposure of IMS exposure data.

According to an aspect of embodiments herein, the object is achieved by a method performed by a distributor function for handling a subscription to expose IMS exposure data in a communications network. The exposure data is related to a UE connected to an IMS network comprised in the communications network. The distributor function is comprised in any one out of: A first network node or a first IMS node.

The distributor function receives a request requesting a subscription to expose IMS exposure data related to the UE. The request is originating from a second network node operating outside of the IMS network.

The distributor function obtains, from a locator function, data identifying a second IMS node supporting exposure capabilities and serving the UE. The locator function is comprised in any one out of: The first IMS node or a third network node.

The distributor function sends to the identified second IMS node (132), a subscription request to expose data related to the UE. The subscription request instructs the second IMS node to notify a network exposure function of a triggering occurrence fulfilling a triggering condition, to expose exposure data, when detected by the second IMS node. The network exposure function is located in the first network node.

The notification enables the network exposure function to notify the second network node of the detected triggering occurrence.

According to an another aspect of embodiments herein, the object is achieved by a method performed by a locator function for handling a subscription to expose Internet protocol Multimedia Subsystem, IMS, exposure data in a communications network. The exposure data is related to a UE connected to an IMS network comprised in the communications network. The locator function is comprised in any one out of: A first IMS node or a third network node.

The locator function receives, from a second IMS node, mapping information related to a registration of the UE in the second IMS node.

Upon request from a distributor function, which distributor function is comprised in any one out of: a first network node or the first IMS node, the locator function locating data identifying the second IMS node serving the UE based on the mapping information.

The locator function provides, to the distributor function, the data identifying the second IMS node serving the UE.

The data identifying the second IMS node enables the distributor function to send a subscription request, to the second IMS node, to expose data related to the UE. The subscription request instructs the second IMS node to notify a network exposure function of a triggering occurrence fulfilling a triggering condition, to expose exposure data, when detected by the second IMS node. The network exposure function is located in the first network node.

According to an another aspect of embodiments herein, the object is achieved by a distributor function configured to handle a subscription to expose Internet protocol Multimedia Subsystem, IMS, exposure data in a communications network. The exposure data is adapted to be related to a UE connected to an IMS network adapted to be comprised in the communications network. The distributor function is adapted to be comprised in any one out of a first network node or a first IMS node. The distributor function further being configured to:
- Receive a request adapted to request a subscription to expose IMS exposure data adapted to be related to the UE, which request is adapted to originate from a second network node adapted to operate outside of the IMS network,
- obtain, from a locator function, data adapted to identify a second IMS node adapted to support exposure capabilities and serving the UE, which locator function is adapted to be comprised in any one out of: the first IMS node or a third network node, and
- send to the identified second IMS node, a subscription request to expose data related to the UE, which subscription request is adapted to instruct the second IMS node to notify a network exposure function of a triggering occurrence fulfilling a triggering condition, to expose exposure data, when detected by the second IMS node, which network exposure function is adapted to be located in the first network node,
wherein the notification is adapted to enable the network exposure function to notify the second network node of the detected triggering occurrence.

According to an another aspect of embodiments herein, the object is achieved by a locator function configured to handle a subscription to expose Internet protocol Multimedia Subsystem, IMS, exposure data in a communications network. The exposure data is adapted to be is related to a UE connected to an IMS network comprised in the communications network. The locator function is adapted to be comprised in any one out of a first IMS node or a third network node, the locator function is further configured to:
- Receive, from a second IMS node, mapping information adapted to be related to a registration of the UE in the second IMS node,
   upon request from a distributor function, which distributor function is adapted to be comprised in any one out of: a first network node or the first IMS node, locate data adapted to identify the second IMS node serving the UE based on the mapping information, and
- provide, to the distributor function, the data adapted to identify the second IMS node serving the UE,
wherein the data adapted to identify the second IMS node is adapted to enable the distributor function to send a subscription request, to the second IMS node, to expose data related to the UE, which subscription request is adapted to instruct the second IMS node to notify a network exposure function of a triggering occurrence fulfilling a triggering condition, to expose exposure data, when detected by the second IMS node, which network exposure function is adapted to be located in the first network node.

In this way, a flexible framework for exposure of IMS data is achieved. This is since the distributor function and locator function are handling subscriptions for exposure of IMS data related to the UE by locating the second IMS node serving the UE, distributing the subscription request received from the second network node to the correct second IMS node, and exposing exposure data to the second network node when a triggering occurrence fulfilling a triggering condition is fulfilled. This results in an application domain that may contribute to care for the support of exposure use cases in an IMS domain. This in turn results in an to improved performance of a communications network using exposure of IMS exposure data.

Embodiments herein e.g. brings the advantages of achieving an IMS agnostic and flexible exposure of IMS data to application functions such as the second network node by using SBI interactions which uses an architecture similar to the one used in 5GC.

### BRIEF DESCRIPTION OF THE DRAWINGS

Examples of embodiments herein are described in more detail with reference to attached drawings in which:
- Figure 1: is a schematic sequence diagram illustrating prior art.
- Figure 2: is a schematic block diagram illustrating prior art.
- Figure 3: is a schematic block diagram illustrating prior art.
- Figures 4: a and b are schematic sequence diagrams illustrating prior art.
- Figure 5: is a schematic sequence diagram illustrating prior art.
- Figure 6: is a schematic block diagram illustrating prior art.
- Figure 7: is a schematic sequence diagram illustrating prior art.
- Figure 8: is a schematic block diagram illustrating an IMS exposure framework according to embodiments herein.
- Figure 9: is a schematic block diagram illustrating embodiments of a communications network.
- Figure 10: is a flowchart depicting embodiments of a method in a distributor function.
- Figure 11: is a flowchart depicting embodiments of a method in a locator function.
- Figure 12: is a schematic block diagram illustrating an IMS exposure framework according to embodiments herein.
- Figure 13: is a schematic sequence diagram illustrating examples of embodiments herein.
- Figure 14: is a schematic sequence diagram illustrating examples of embodiments herein.
- Figures 15: a and b are schematic block diagrams illustrating embodiments of a distributor function.
- Figures 16: a and b are schematic block diagrams illustrating embodiments of a locator function
- Figure 17: schematically illustrates a telecommunication network connected via an intermediate network to a host computer.
- Figure 18: is a generalized block diagram of a host computer communicating via a base station with a user equipment over a partially wireless connection.
- Figures 19: to 22 are flowcharts illustrating methods implemented in a communication system including a host computer, a base station and a user equipment.

### DETAILED DESCRIPTION

Embodiments herein relate to a communications network and the handling of subscriptions to expose IMS exposure data.

By introducing an IMS real time event data exposure framework, embodiments herein enable consumers, e.g., AFs, of IMS event and/or exposure data, that their event subscription is served by the correct IMS NFs. This without knowledge of the underlying network. The framework is built on SBA principles and provides SBI to enables consumers of IMS exposure data to avail of the service.

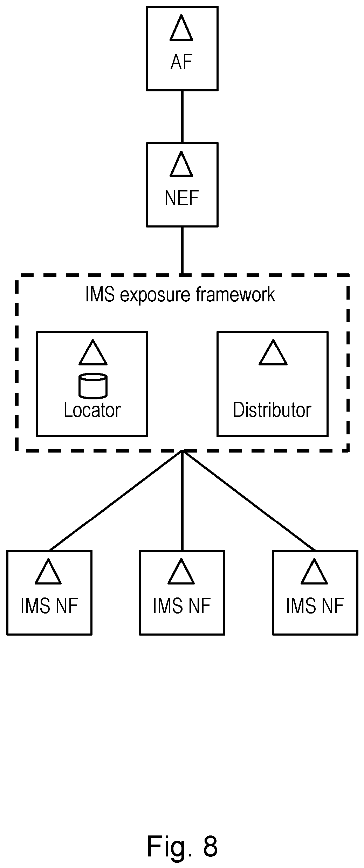

The framework according to examples of embodiments herein, as shown in Figure **8****,** comprises IMS locater handling functionality, e.g., a locator function, which provides binding and/or mapping information and/or data for NFs that supports IMS data exposure. This binding and/or mapping information and/or data is provided to a repository function, e.g., the locator function, by the relevant IMS NFs. The information comprises the identity of the subscriber, e.g., IMS Private Identity (IMPI) and/or IMS Public User Identity (IMPU), currently being served by said NF and the NFs instance address.

The binding and/or mapping information and procedures related to it for IMS registration aware NFs, such as S-CSCF and IMS AS, may be provided by the IMS HSS in the role of a "locator handler", such as the locator function. This implies that at IMS registration, the S-CSCF and IMS AS e.g., MMTel AS, using the SBI interface toward HSS, Nhss_IMS service, over N70 and N71 reference points, perform a Registration of the current serving subscriber in HSS.

For a P-CSCF, which is IMS registration aware, there are three options:
1. Introduce a Registration procedure over Nhss_IMS from P-CSCF to HSS, which would result in the following event subscription flow: AF->NEF-> HSS -> P-CSCF for an Event subscription. Currently, the P-CSCF lacks any interaction with HSS.
2. Let the S-CSCF take care of Event distribution to the serving P-CSCF, which would result in following event subscription flow: AF-> NEF-> HSS -> S-CSCF -> P-CSCF.
3. Enable the P-CSCF to register the subscriber binding in the BSF at IMS Registration, which would result in the following event subscription flow: AF-> NEF -> P-CSCF, while NEF would be notified and/or query the BSF to find correct P-CSCF.

For IMS NFs that are not IMS Registration aware, such as e.g., IBCF and Multimedia resource functions (MRF), and given that the registration of the subscriber binding will only take place during a call and such NFs lacks HSS interactions, the proposed solution is to create such a binding in the BSF in the role of "locator handler", such as locator function. The event subscription flow would subsequently be as follows, which is similar to Option 3 for P-CSCF but would take place at the call setup: AF-> NEF - > IMS NF. The NEF will subscribe to subscriber availability in the BSF and will be notified at call setup since the specific IMS NF will register its binding in the BSF.

The framework also introduces a "distribution handler", e.g., a distributor function, which on locating the correct IMS NF, availing of the locator function, distributes the IMS event subscriptions to the relevant IMS NFs serving the requested event.

Examples of embodiments herein cater for current IMS customer requests, such as call notification events, e.g., subscriber "call states" - busy/idle often provided by MMTel AS, and also for future more advanced requests whereby event exposure information and/or data is required from a variety of IMS NF types.

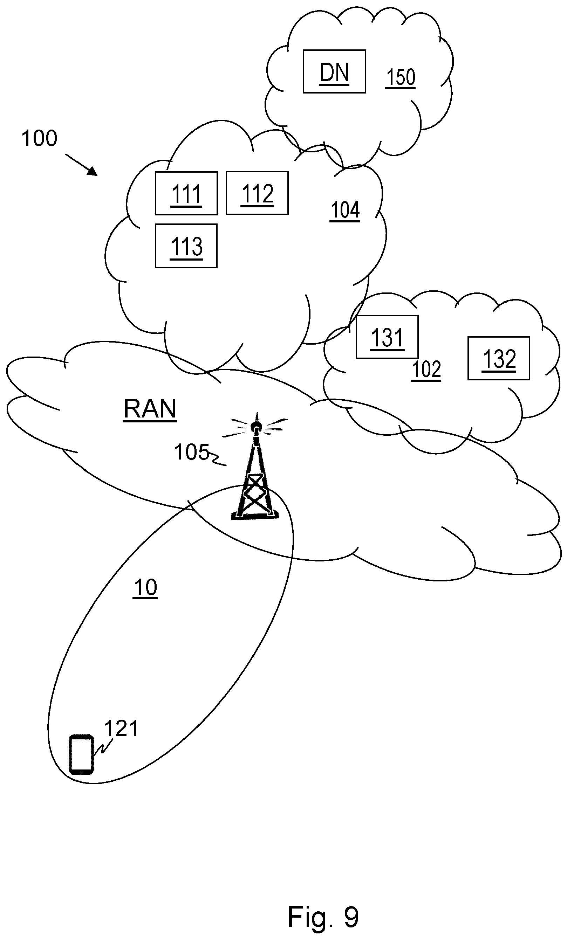

**Figure 9** is a schematic overview depicting a **communications network 100** wherein embodiments herein may be implemented. The communications network 100 comprises one or more **RANs** one or more IMS networks, e.g. the **IMS network 102,** and one or more CNs, e.g., the **CN 104.** The communications network 100 may use a number of different technologies, such as Wi-Fi, Long Term Evolution (LTE), LTE-Advanced, 5G, New Radio (NR), 6G, Wideband Code Division Multiple Access (WCDMA), Global System for Mobile communications/enhanced Data rate for GSM Evolution (GSM/EDGE), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

A number of RAN nodes operate in the communications network 100 such as e.g. a **RAN node 105.** The RAN node 105 provides radio coverage in a number of cells which may also be referred to as a beam or a beam group of beams, such as a **cell 10** provided by the RAN node 105.

The RAN node 105 may be any of an NG-RAN node, a transmission and reception point e.g. a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a UE 121 within the service area served by the RAN node 105 depending e.g. on the first radio access technology and terminology used. The RAN node 105 may be referred to as a serving RAN node and communicates with UEs such as the UE 121, with Downlink (DL) transmissions to the UE 121, and in Uplink (UL) transmissions from the UE 121.

A number of UEs operate in the communication network 100, such as e.g. the **UE 121.** The UE 121 may also be referred to as an IoT device, a mobile station, a non-access point (non-AP), a STA, and/or a wireless terminal. It should be understood by the skilled in the art that "UE" is a non-limiting term which means any terminal, wireless communication terminal, user equipment, Machine Type Communication (MTC) device, Device to Device (D2D) terminal, a radio device in a vehicle, or node e.g. smart phone, laptop, mobile phone, sensor, relay, mobile tablets or even a small base station communicating within a cell.

A **first network node 111** operates in the communications network 100. The first network node 111 may e.g. be an NEF node operating in the CN 104. The first network node 111 may e.g., be a function node within the CN network 104, e.g. a 5GC, and may be in charge of securely expose NF capabilities, events and exposure data to AFs external to the 5GC.

A **second network node 112** operates in the wireless communications network 100. The second network node 112 may e.g., be an AF node. The second network node 112 may e.g., operate in the CN 104, or in an external/untrusted network.

A **third network node 112** operates in the wireless communications network 100. The third network node 113 may e.g., be an BSF node. The third network node 112 may e.g., operate in the CN 104.

A **first IMS node 131** and a **second IMS node 132** operate in the IMS network 102. The IMS network 102 is an architecture for delivering media content over an IP packet switched transport. The first IMS node 131 may e.g., be an HSS node, and the second IMS node 132 may e.g. be a P-CSCF node, a S-CSCF node, and IMS AS node or any other type of node or NF operating in the IMS network 102.

Methods herein may be performed by the distributor function, such as e.g., the first network node 111 and/or the first IMS node 121, and the locator function, such as e.g., the second IMS node 132 and/or the third network node 113. As an alternative, a Distributed Node (DN) and functionality, e.g. comprised in a **cloud 150** as shown in Figure 8, may be used for performing or partly performing the methods herein.

Examples of embodiments herein may provide a framework and/or an architecture, and services to allow the second network node 112, e.g., an AF node, to subscribe to IMS event and/or data related to a specific subscriber, e.g., the UE 121, a group of subscribers, e.g., one or more UEs, and/or subscriptions. Further, according to examples of embodiments herein, a distributor function and a locator function may be provided. The locator function may provide locating functionality for locating NFs, e.g., the second IMS node 132, serving the UE 121. The distributor function may provide distributing functionality for distributing a subscription request to the located second IMS node 132, and distribute notifications from the second IMS node 132 to the second network node 112. Example of embodiments herein is aligned with current principles of exposure in 5GC while it is extended to cater for IMS use cases also and may solve the major problem with locating the IMS NF serving a particular UE.

Further, examples of embodiments herein may provide the following advantages of:
- Ensuring that consumers, e.g., AF nodes such as the second network node 112, are IMS agnostic, i.e., does not require to have a detailed view of IMS NF topology.
- Ensuring that consumers, e.g., AF nodes such as the second network node 112, does not need to implement IMS specific business logic to handle e.g., subscribers, e.g., the UE 121, within the IMS domain that are un-registered, non-registered & non-allocated (2G/3G allocated but not registered), IMS specific identity management, e.g., mapping of identities used by consumers to specific IMS identities that may be related to the subscribers' multiple devices and/or multiple personas etc.
- A flexible and extendable framework and architecture from a deployment perspective.
- A flexible and extendable framework and architecture from an architectural perspective. The functions in the exposure framework, e.g., the distributor function and the locator function, may be implemented as parts of, and/or used by, existing NFs, such as e.g., HSS/UDM, BSF, NEF.

A number of embodiments will now be described, some of which may be seen as alternatives, while some may be used in combination.

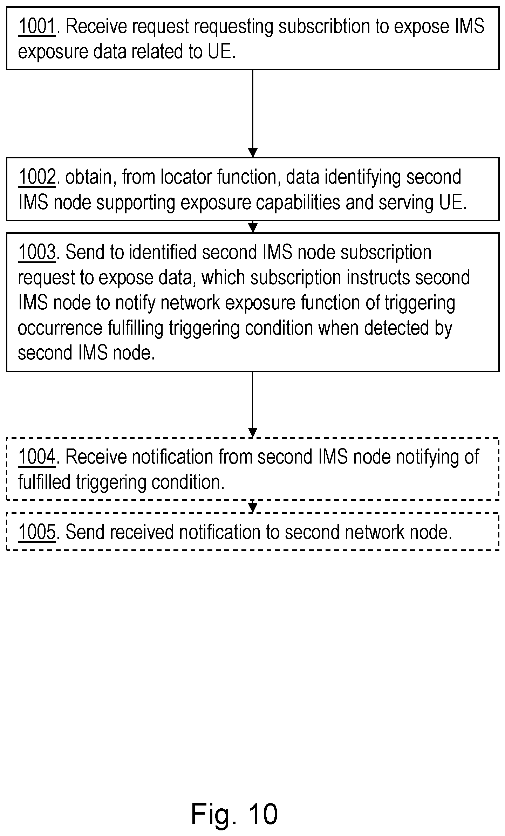

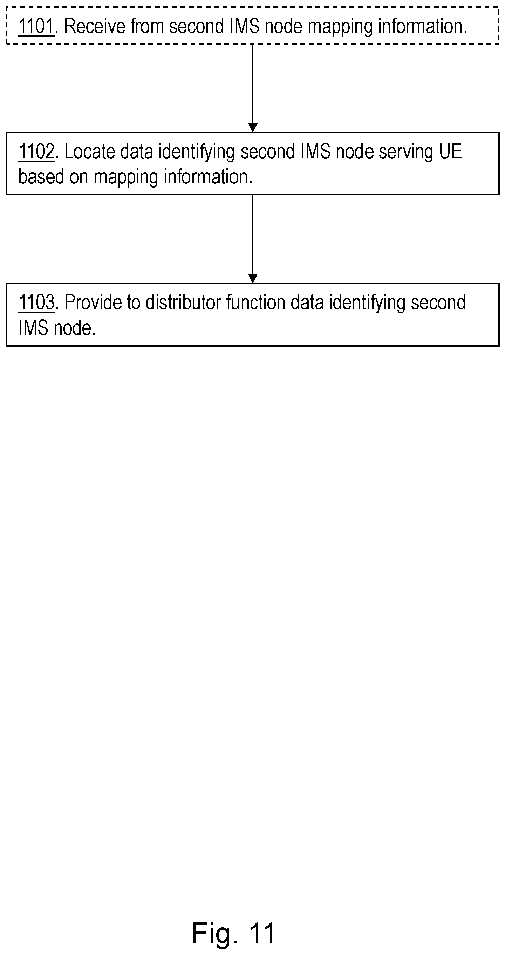

The embodiments of a method will be first be generally described in view of the distributor function together with Figure 10, then in view of the locator function together with Figure 11. This will be followed by a more detailed description.

A method according to embodiments will now be described from the view of the distributor function together with **Figure 10.** Figure 10 depicts example embodiments of a method performed by the distributor function for handling a subscription to expose IMS exposure data in the wireless communications network 100. The exposure data is related to the UE 121 connected to the IMS network 105 comprised in the wireless communications network 100. The distributor function is comprised in any one out of: The first network node 111 or the first IMS node 131.

The first network node 111 may e.g., be a NEF node and the first IMS node 131 may e.g., be an HSS.

The method comprises the following actions, which actions may be taken in any suitable order. Actions that are optional are presented in dashed boxes in Figure 10.

### Action 1001

The distributor function receives a request requesting a subscription to expose IMS exposure data related to the UE 121. The request is originating from the second network node 112. The second network node 112 operates outside of the IMS network 105.

The second network node 112 may e.g., be and AF node and may operate in the CN 104, or in an external/untrusted network. Exposure data may be any one or more out of event data, e.g., data related to an event, location of the UE 121, roaming state of the UE 121, communication state of the UE 121, e.g., idle, busy, not registered, number of failed and/or successful calls in a certain geographic area etc.

In some embodiments, the subscription request comprises any one or more out of: The triggering condition, and a type of exposure data to expose.

The received subscription request may be communicated, e.g., received, using an SBI. The SBI may be a new SBI service, e.g., SBI service Nnef_IMS_EE_subscribe when the distributor function is comprised in the first network node 111. The SBI e.g., another new SBI service, e.g., SBI service Nhss_IMS_EE_subscribe, when the distributor function is comprised in the first IMS node 131.

### Action 1002

The distributor function obtains data identifying the second IMS node 132 from the locator function. The second IMS node 132 supports exposure capabilities and serves the UE 121. The locator function is comprised in any one out of: The first IMS node 131 or the third network node 113. The third network node 113 may e.g., be the BSF node.

In some embodiments, the distributor function obtains data identifying the second IMS node 132 by sending a request for data identifying the second IMS node 132 to the locator function. The request comprises a first identity (ID) identifying the UE 121. The distributor function may then receive the data identifying the second IMS node (132), e.g., from the locator function. The data identifying the second IMS node 132 may comprise any one or more out of a second ID identifying the second IMS node 132, and an address of the second IMS node 132.

When, according to some embodiments, both the distributor function and the locator function is comprised in the same node, e.g., the first IMS node 131, both the request for data identifying the second IMS node 132 and the data identifying the second IMS node 132 are sent and received internally in the first IMS node 131.

### Action 1003

The distributor function sends, to the identified second IMS node 132, a subscription request to expose data related to the UE 121. The subscription request instructs the second IMS node 132 to notify the network exposure function of a triggering occurrence fulfilling a triggering condition, to expose exposure data, when detected by the second IMS node 132. The network exposure function is located in the first network node 111. The notification enables the network exposure function to notify the second network node 112 of the detected triggering occurrence.

The sent subscription request may be communicated, e.g., sent, using an SBI. The SBI may be a new or updated SBI service, e.g., Nims(NF_IMS)_EE service.

The notification may comprise the exposure data.

### Action 1004

In some embodiments, the distributor function receives a notification from the second IMS node 132. The notification notifies the distributor function of the fulfilled triggering occurrence detected by the second IMS node 132. The triggering occurrence is related to the UE 121. As mentioned above, the notification may comprise the exposure data.

The received notification may be communicated, e.g., received, using an SBI. The SBI may be a new or updated SBI service, e.g., Nims(NF_IMS)_EE service.

### Action 1005

In some embodiments, the distributor function sends the received notification to the second network node 112. The distributor function thereby exposes the IMS exposure data to the second network node 112. The notification is communicated using an SBI. As mentioned above, the notification may comprise the exposure data.

The sent notification may be communicated, e.g., sent, using an SBI. The SBI may be a new or updated SBI service, e.g., Nims(NF_IMS)_EE service.

A method according to embodiments will now be described from the view of the locator function together with Figure 11. Figure 11 depicts example embodiments of a method performed by the locator function for handling a subscription to expose IMS exposure data in the communications network 100, the exposure data is related to the UE 121 connected to the IMS network 102 comprised in the communications network 100. The locator function is comprised in any one out of: The first IMS node 131 or a third network node. The first IMS node 131 may e.g., be an HSS and the third network node 113 may e.g., be the BSF node. Exposure data may be any one or more out of event data, e.g., data related to an event, location of the UE 121, roaming state of the UE 121, communication state of the UE 121, e.g., idle, busy, not registered, number of failed and/or successful calls in a certain geographic area etc.

The method comprises the following actions, which actions may be taken in any suitable order. Actions that are optional are presented in dashed boxes in Figure 11.

### Action 1101

The locator function receives mapping information related to a registration of the UE 121 in the second IMS node 132. The mapping information is received from the second IMS node 132. The second IMS node 132 may e.g., be an IMS NF node, such as e.g., a P-CSCF node, a S-CSCF node, an IMS AS node or any other type of node or NF operating in the IMS network 102.

The mapping information may comprise any of or more out of: The first ID identifying the UE 121, the second ID identifying the second IMS node 132, and the address of the second IMS node 132.

The mapping information is received over a SBI. The SBI may be a new or updated SBI service, e.g., Nbsf_mgmt service when the locator function is comprised in the third network node 113, or Nhss_ims when the locator function is comprised in the first IMS node 131

### Action 1102

Upon request from a distributor function, the locator function locates data identifying the second IMS node 132 serving the UE 121 based on the mapping information. The distributor function is comprised in any one out of: The first network node 111 or the first IMS node 131. As mentioned above, the first network node 111 may e.g., be a NEF node and the first IMS node 131 may e.g., be an HSS.

In some embodiments, the locator function locates the data identifying the second IMS node 132 by receiving a request from the distributor function. The request may comprise the first ID identifying the UE 121. In this embodiment, the locator function locates the data identifying the second IMS node 132 further based on the first ID.

When, according to some embodiments, both the distributor function and the locator function is comprised in the same node, e.g., the first IMS node 131, the request for data identifying the second IMS node 132 is sent and received internally in the first IMS node 131.

### Action 1103

The locator function provides the data identifying the second IMS node 132 serving the UE 121, to the distributor function.

The data identifying the second IMS node 132 enables the distributor function to send a subscription request, to the second IMS node 132, to expose data related to the UE 121. The subscription request instructs the second IMS node 132 to notify the network exposure function of a triggering occurrence fulfilling a triggering condition, to expose exposure data, when detected by the second IMS node 132. The network exposure function is comprised in the first network node 111.

In some embodiments, the locator function provides the information identifying the second IMS node 132 by sending the data identifying the second IMS node 132 to the distributor function. The information identifying the second IMS node 132 may comprise any one or more out of: the second ID identifying the second IMS node 132, and the address of the second IMS node 132.

When, according to some embodiments, both the distributor function and the locator function is comprised in the same node, e.g., the first IMS node 131, the data identifying the second IMS node 132 is sent and received internally in the first IMS node 131.

Embodiments mentioned above will now be further described and exemplified. The embodiments below is applicable to and may be combined with any suitable embodiment described above.

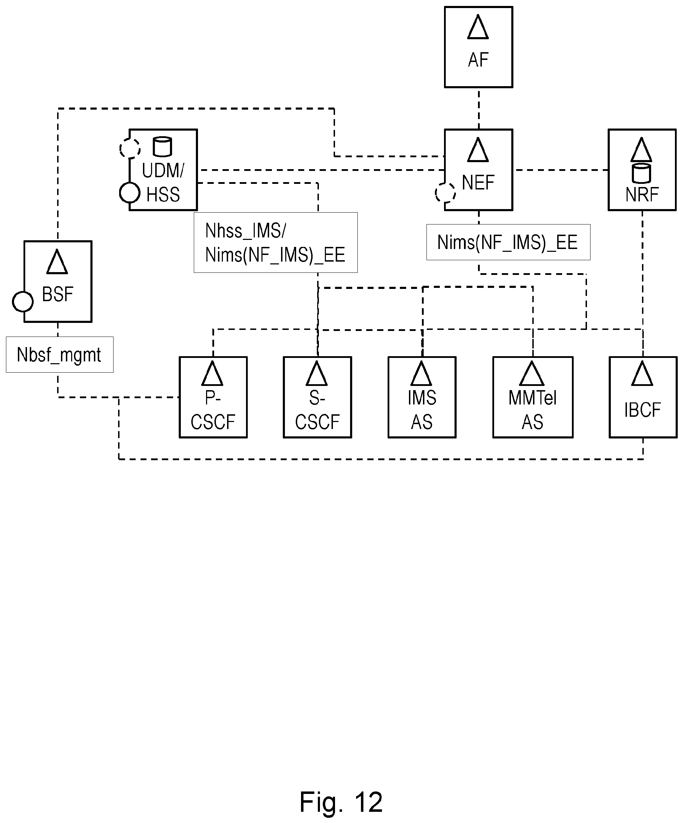

**Figure 12** shows one example of an architectural overview of how the IMS real time event data exposure framework may be realized. The distributor function is represented by a dashed lined circle. The locator function is represented by a solid lined circle.

The IMS locator handling functionality, which provides binding and/or mapping information for NFs that supports IMS event data exposure may be realized by the UDM/HSS function, or the 5GC BSF. E.g., the IMS locator handling (repository) functionality, such as e.g., the locator function, which provides binding and/or mapping information for NFs that supports IMS event data exposure, such as the exposure capabilities referred to above, may be realized by, such as implemented or comprised in, the UDM/HSS function, such as e.g., the first IMS node 131, or the 5GC BSF, such as e.g., the third network node 131.

As mentioned above, the placement of the locator function may be dependent on the nature of the event and/or exposure data being requested.

For events and/or exposure data that are related to IMS registration, NF allocation, registration or allocation lifetime of a subscriber, and are provided by IMS NFs that have an interface to HSS, then the UDM/HSS may host the locator function. E.g., for events and/or exposure data that are related to IMS registration, NF allocation, registration or allocation lifetime of a subscriber, such as the UE 121, or group of subscribers, such as a group of UEs and are provided by IMS NFs, such as the second IMS node 132, that have an interface to HSS, e.g., S-CSCF or IMS AS, then UDM/HSS may host, such as comprise, the locator function.

For events and/or exposure data that are related to call state provided by IMS NFs, that currently do not have an interface to HSS, and are not part of the "IMS registration flow", then the BSF may host the locator function. E.g., for events and/or exposure data that are related to call state provided by IMS NFs, such as the second IMS node 132, that currently do not have an interface to HSS, such as the first IMS node 131, and are not part of the "IMS registration flow", e.g., the IBCF or MRF, then BSF, such as e.g., the third network node 113, may host, such as comprise, the locator function.

When the P-CSCF, which is aware of the "IMS registration flow" but does not currently have an HSS interface, is the IMS NF providing event and/or exposure data, the UDM/HSS, e.g., as mentioned in option 3 above, or the BSF may host the locator function. E.g., when the P-CSCF, which is aware of the "IMS registration flow" but does not currently have an HSS interface, is the IMS NF providing event and/or exposure data, the UDM/HSS, such as e.g., the first IMS node 113, e.g., as mentioned in option 3 above, or the BSF, such as e.g., the third network node 113 may host, such as comprise, the locator function.

When the BSF provides the locator function, or plays the role of locator handler, the existing 5GC function may be updated to provide IMS specific services that IMS consumers, e.g., IMS NFs, may use to register their exposure capability binding and/or mapping information via the updated service offered by the BSF. E.g., when the BSF provides, such as comprise, the locator function, or plays the role of locator handler, the existing 5GC function may be updated to provide IMS specific services that IMS consumers, e.g., IMS NFs such as the second IMS node 132, may use to register their exposure capability binding and/or mapping information via the updated service offered by the BSF. The updated service may e.g., be the SBI service *Nbsf_Management_Register Service Operation.* As an example, an IMS NF, e.g., P-CSCF or IBCF, that has IMS exposure capability registers the subscriber that it is currently serving and its own instance address. This information is used by consumers, e.g., the NEF, to discover, e.g., by using the existing BSF service *Nbsf_Management_Discovery Service Operation"* the specific NF instances serving the requested event and/or exposure data subscription. E.g., the updated service may e.g., be the SBI service *Nbsf_Management_Register Service Operation.* As an example, an IMS NF, e.g., P-CSCF or IBCF, that has IMS exposure capability registers the subscriber, such as the UE 121, that it is currently serving and its own instance address. This information is used by consumers, e.g., the distributor function such as the NEF node or first network node 111, to discover, such as obtain, e.g., by using the existing BSF service *Nbsf_Management_Discovery Service Operation"* the specific NF instances, such as the second IMS node 132, serving the requested event and/or exposure data subscription.

When the UDM/HSS provides the locator function or plays the role of locator handler, the existing function may be updated to provide an SBI IMS specific service that IMS consumers, e.g., S-CSCF or IMS AS, may use to register their exposure capability binding and/or mapping information via for example the updated service *Nhss_imsUEContextManagement service operation* over the reference point N70 or N71. E.g., when the UDM/HSS, such as the first IMS node 131, provides, such as comprise, the locator function or plays the role of locator handler, the existing function may be updated to provide an SBI IMS specific service that IMS consumers, e.g., S-CSCF or IMS AS such as the second IMS node132, may use to register their exposure capability binding and/or mapping information via for example the updated service *Nhss_imsUEContextManagement service operation* over the reference point N70 or N71.

This information provided by the newly introduced locator functionality in the HSS/UDM may be used by consumers, e.g., the NEF, to locate the specific NF instances serving the requested event and/or exposure data subscription. Alternatively the NEF may avail the UDM/HSS to distribute subscriptions to the relevant NF e.g., by using distribution logic introduced in the HSS/UDM. E.g., this information, or data, provided by the newly introduced locator functionality, such as the locator function, in the HSS may be used by consumers, e.g., the distributor function such as the NEF node or first network node 111, to locate, such as obtain, the specific NF instances, such as the second IMS node 132, serving the requested event and/or exposure data subscription. Alternatively the NEF may avail the UDM/HSS to distribute subscriptions to the relevant NF, such as the second IMS node 132, e.g., by using distribution logic, such as e.g., the distributor function, introduced, such as comprised, in the HSS.

As shown in Figure 12, and as mentioned above, the UDM/HSS may also comprise distribution handler logic, or play the role of distributor, and distribute the event and/or data exposure subscription on behalf of the NEF. E.g., the UDM/HSS, such as the first IMS node 131, may also comprise distribution handler logic, such as the distributor function, or play the role of distributor, and distribute the event and/or data exposure subscription on behalf of the NEF, such as the first network node 111. Availing of the locator functionality to locate the correct NF instance, the UDM/HSS may use the newly introduced *Nims(NF_IMS)_EE_Subscribe* SBI service towards the relevant IMS NF, e.g. S-CSCF or IMS AS, to subscribe to said event and/or data exposure. The relevant IMS NFs may notify NEF, e.g. "NotifyEndPoint=NEF", via the newly introduced *Nims(NF_IMS)_EE_Notify* SBI service of an event occurrence. E.g., availing of the locator functionality to locate the correct NF instance, such as the second IMS node 132, the UDM/HSS may use the newly introduced *Nims(NF_IMS)_EE_Subscribe* SBI service towards the relevant IMS NF, e.g. S-CSCF or IMS AS such as the second IMS node 132, to subscribe to said event and/or data exposure. The relevant IMS NFs, e.g., the S-CSCF or IMS AS such as the second IMS node 132, may notify NEF, such as the first network node 111, e.g. "NotifyEndPoint=NEF", via the newly introduced *Nims(NF_IMS)_EE_Notify* SBI service of an event occurrence, such as a detected triggering occurrence fulfilling a triggering condition as mentioned above.

The NEF may also contain distribution handler logic or play the role of distributor, and distribute the event and/or exposure data subscription to the relevant IMS NF based on information provided by the locator function either in the UDM/HSS or the BSF. E.g, the NEF, such as the first network node 111, may also contain distribution handler logic, such as the distributor function, or play the role of distributor, and distribute the event and/or exposure data subscription to the relevant IMS NF, such as the second IMS node 132, based on information, such as the data identifying the second IMS node 132, provided by, such as obtained from, the locator function either in UDM/HSS or BSF, e.g., the first IMS node 131 or the third network node 113. As mentioned above, the NEF may use the newly introduced *Nims(NF_IMS)_EE_Subscribe* SBI service towards the relevant IMS NF, e.g., P-CSCF or IBCF, to subscribe to said event and/or exposure data. The relevant IMS NFs, e.g. P-CSCF or IBCF, may notify the NEF via the newly introduced *Nims(NF_IMS)_EE_Notify* SBI service of an event occurrence. E.g., the NEF, e.g., the first network node 111, may use the newly introduced *Nims(NF_IMS)_EE_Subscribe* SBI service towards the relevant IMS NF e.g. P-CSCF or IBCF such as the second IMS node 132, to subscribe to said event and/or exposure data. The relevant IMS NFs, e.g. P-CSCF or IBCF such as the second IMS node 132, may notify the NEF, such as the first network node 111, via the newly introduced *Nims(NF_IMS)_EE_Notify* SBI service of an event occurrence, such as a detected triggering occurrence fulfilling a triggering condition as mentioned above.

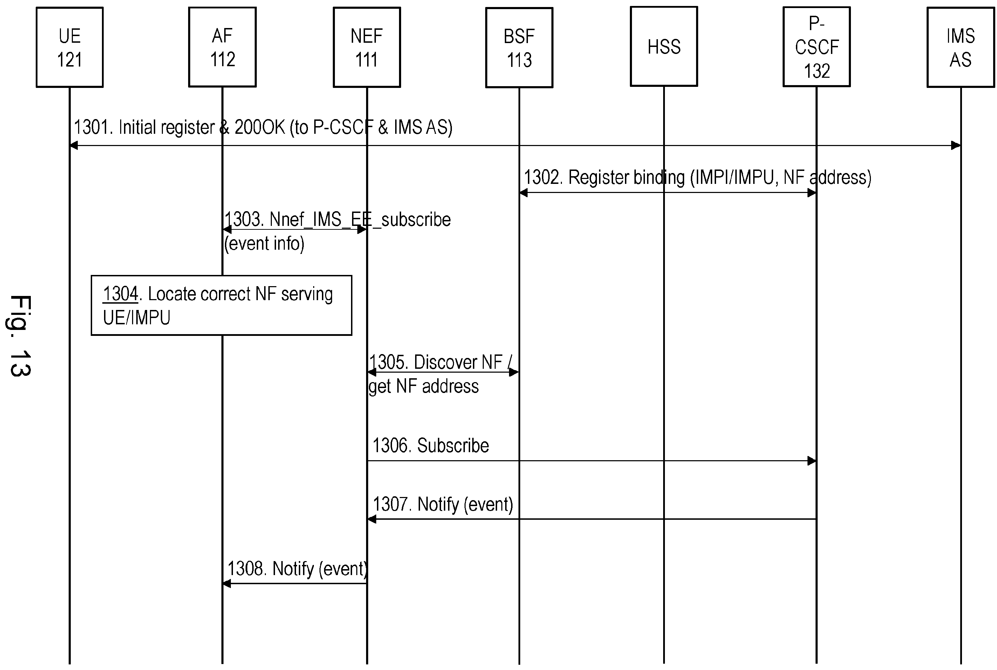

Figure 13 shows a sequence diagram according to an example of embodiments herein. According to this example, a P-CSCF 132, such as the second IMS node 132 or IMF NF, uses a locator function comprised in the BSF 113, such as the BSF node or the third network node 113. Further, according to this example, the distributor function is comprised in a NEF 111, such as the first network node 111.

S1301. The UE 121 may perform an initial registration to the IMS network 102 by sending a registration request to e.g., the IMS network (102). The request may be sent via the P-CSCF 132, such as the second IMS node 132. The UE 121 may receive, via the P-CSCF 132, an acknowledgement message, e.g., a 200OK message, from the IMS network (102).

**S1302.** The BSF 113, such as the locator function, e.g., the third network node 113, , may receive, such as obtains, mapping and/or binding information from the P-CSCF 132, such as the second IMS node 132, which supports IMS exposure capabilities. The mapping and/or binding information may be related to the UE 121. As mentioned above, the mapping and/or binding information may be received using the updated SBI, e.g., the SBI service *Nbsf_Management_*Register service operation.

**S1303.** The NEF 111, such as the distributor function e.g., the first network node 111, may receive an IMS event exposure request, such as the request requesting the subscription to expose IMS exposure data, from the AF 112, such as the second network node 112. As mentioned above, the IMS event exposure request may be sent using the new SBI, e.g., *Nnef_IMS_EE_subscribe* service operation.

**S1304.** The NEF 111, such as the distributor function e.g., the first network node 111, may locate, such as obtain, the correct IMS NF, such as the P-CSCF 132 e.g., the data identifying the second IMS node 132 serving the UE 121.

**S1305.** When locating, such as obtaining, the IMS NF serving the UE 121, the NEF 111, such as the distributor function e.g., the first network node 111, may send a message, e.g., a discovery request message, to the BSF 113, such as the locator function e.g., the third network node 113. In response to the discovery request message, the BSF 113 may send, such as provide, a response, such as the data identifying the second IMS node 132, to the NEF 111. The BSF 113 may, before sending the response to the NEF 111, locate the data identifying the second IMS node 132, e.g., by checking whether it has received, mapping and/or binding information related to the UE 121. As mentioned above, the discovery request message may be sent using the updated SBI, e.g., *Nbsf_Management_*Discovery service operation.

**S1306.** The NEF 111, such as the distributor function e.g., the first network node 111, may send the subscription request to expose IMS exposure data, such as the received IMS event exposure request, to the located IMS NF, such as the P-CSCF 132 e.g., the second IMS node 132. The subscription request may comprise IMS trigger data, such as e.g., the triggering condition, and the P-CSCF 132 may arm the received IMS trigger. As mentioned above, the subscription request may be sent using the new SBI, e.g., *Nims(NF_IMS)_EE_Subscribe* service operation.

**S1307.** In response to the armed trigger firing, such as the triggering occurrence fulfilling the triggering condition detected by the P-CSCF 132, e.g., second IMS node 132, the NEF 111, such as the distributor function e.g., the first network node 111, may receive a notify message, such as e.g., the notification notifying the distributor function of the fulfilled triggering occurrence detected by the P-CSCF 132, e.g., second IMS node 132. The notify message may comprise event info, such as the exposure data, related to the event associated with the triggering occurrence. As mentioned above, the notification message may be received using the new SBI, e.g., *Nims(NF_IMS)_EE_Notify* service operation.

**S1308.** The NEF 111, such as the distributor function e.g., the first network node 111, may send the notify message, such as e.g., the notification notifying the distributor function of the fulfilled triggering occurrence detected by the P-CSCF 132, e.g., second IMS node 132, to the AF 112, such as the second network node 112. As mentioned above, the notify message may comprise event info, such as the exposure data, related to the event associated with the triggering occurrence.

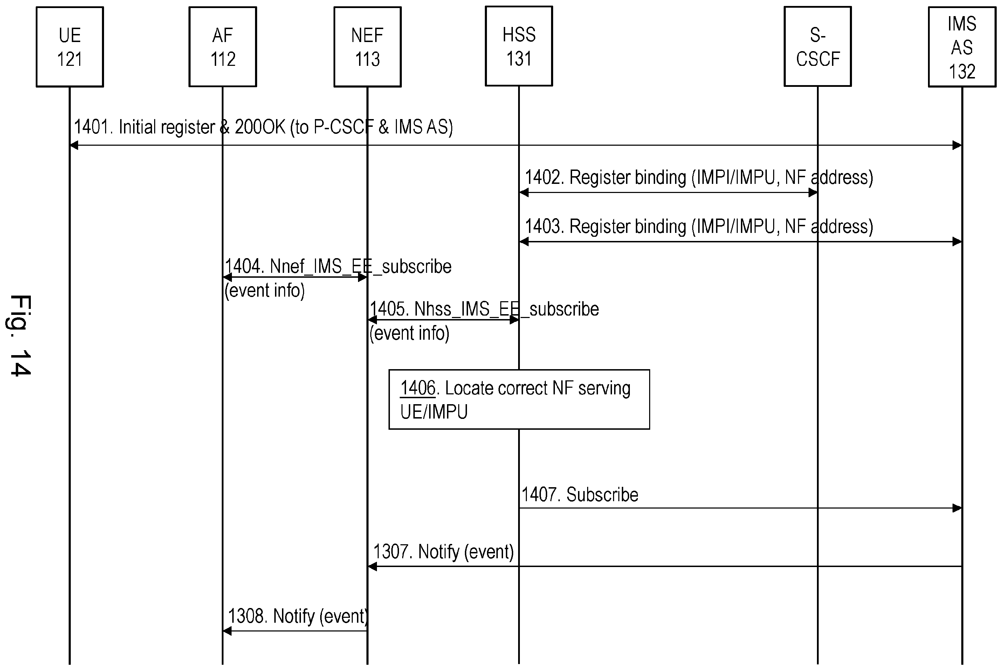

**Figure 14** shows a sequence diagram according to an example of embodiments herein. According to this example, an IMS-AS 132, such as the second IMS node 132 or IMF NF, uses a locator function comprised in the HSS 131, such as the HSS node or the first IMS node 131. Further, according to this example, the distributor function is comprised in a HSS 131, such as the first IMS node 131.

**S1401.** The UE 121 may perform an initial registration to the IMS network 102 by sending a registration request to e.g., the IMS network 102. The request may be sent via the S-CSCF node to the IMS AS, such as the second IMS node 132 and may be referred to as a third party registration. The UE 121 may receive, via the S-CSCF node, an acknowledgement message, e.g., a 200OK message, from the IMS network (102).

**S1402.** The HSS 131, such as the locator function, e.g., the first IMS node 131, which supports IMS exposure capabilities, may receive, such as obtains, mapping and/or binding information from the IMS AS 132, such as the second IMS node 132. The mapping and/or binding information may be related to the UE 121. As mentioned above, the mapping and/or binding information may be received using the updated SBI, e.g., the SBI service *Nhss_imsUEContextManagement* service operation.

**S1403.** In some examples, the HSS 131, such as the locator function, e.g., the first IMS node 131 may receive, such as obtains, mapping and/or binding information from the IMS AS 132, such as the second IMS node 132, which supports IMS exposure capabilities. The mapping and/or binding information may be related to the UE 121. As mentioned above, the mapping and/or binding information may be received using the updated SBI, e.g., the SBI service *Nhss_imsUEContextManagement* service operation.

**S1404.** The NEF 111, such as the first network node 111, may receive an IMS event exposure request, such as the request requesting the subscription to expose IMS exposure data, from the AF 112, such as the second network node 112. As mentioned above, the IMS event exposure request may be sent using the new SBI, e.g., *Nnef_IMS_EE_subscribe* service operation.

**S1405.** The NEF 111, such as the first network node 111, may forward the IMS event exposure request, such as the request requesting the subscription to expose IMS exposure data, from the AF 112, such as the second network node 112, to the HSS 131, such as the distributor function e.g., the first IMS node 131. The IMS event exposure request may be sent using the new SBI, e.g., *Nhss_IMS_EE_subscribe* service operation.

**S1406.** The HSS 111, such as the distributor function e.g., the first IMS node 131, may locate, such as obtain, the correct IMS NF, such as the IMS AS 132 e.g., the data identifying second IMS node 132 serving the UE 121. Since the HSS 131 also comprises the locator function, the HSS 131 may locate, such as obtain, the data identifying second IMS node 132 serving the UE 121 using the locator function comprised in the HSS 131.

**S1407.** The HSS 131, such as the distributor function e.g., the first IMS node 131, may forward, such as send, the subscription request, such as the received IMS event exposure request, to the located IMS NF, such as the IMS AS 132 e.g., the second IMS node 132. The subscription request may be forwarded on behalf of the NEF 111. The subscription request may comprise IMS trigger data, such as e.g., the triggering condition, and the IMS AS 132 may arm the received IMS trigger. As mentioned above, the subscription request may be sent using the new SBI, e.g., *Nims(NF_IMS)_EE_Subscribe SBI service.* Also as mentioned above, the subscription request may be sent to the IMS AS 132 with instructions to notify the NEF 111 of a fulfilled triggering occurrence, e.g. by including "NotifyEndPoint=NEF" in the forwarded subscription request.

**S1408.** In response to the armed trigger firing, such as the triggering occurrence fulfilling the triggering condition detected by the IMS AS 132, e.g., second IMS node 132, the NEF 111, such as the first network node 111, may receive a notify message, such as e.g., the notification notifying the distributor function of the fulfilled triggering occurrence detected by the IMS AS 132, e.g., second IMS node 132. The notify message may comprise event info, such as the exposure data, related to the event associated with the triggering occurrence. As mentioned above, the notification message may be received using the new SBI, e.g., *Nims(NF_IMS)_EE_Notify* service operation.

**S1409.** The NEF 111, such as the first network node 111, may send the notify message, such as e.g., the notification notifying the distributor function of the fulfilled triggering occurrence detected by the IMS AS 132, e.g., second IMS node 132, to the AF 112, such as the second network node 112. As mentioned above, the notify message may comprise event info, such as the exposure data, related to the event associated with the triggering occurrence.

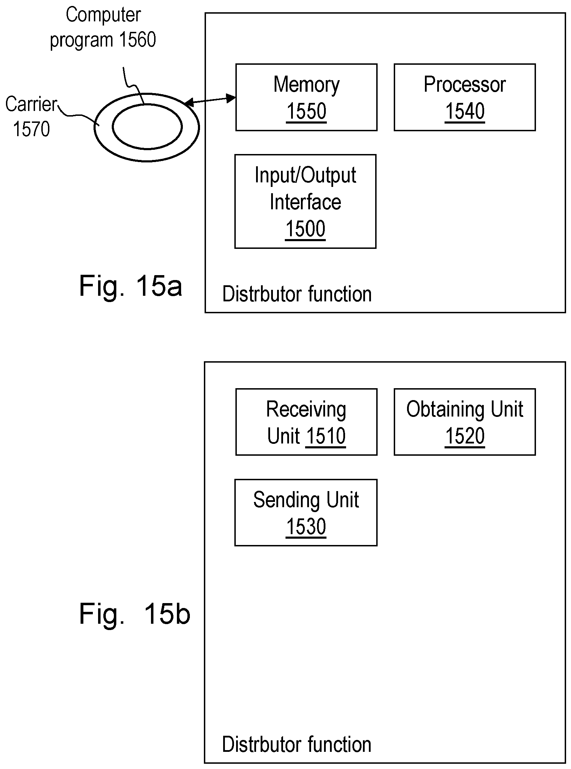

To perform the method actions, the distributor function, and/or the node comprising the distributor function, may comprise an arrangement depicted in **Figure 15a** **and b.** The distributor function is configured to handle a subscription to expose IMS exposure data in the communications network 100. The exposure data is adapted to be related to the UE 121 connected to the IMS network 102 adapted to be comprised in the communications network 100. The distributor function is adapted to be comprised in any one out of the first network node 111 or the first IMS node 131.

The distributor function, and/or the node comprising the distributor function, may comprise an **input and output interface1500** configured to communicate with e.g. the first UE 121, the first network node 111, the second network node 112, the third network node 113, the first IMS node 131 and the second IMS node 132, and with network nodes in the communications network 100 and the IMS network 102.

The distributor function is further configured to, e.g. by means of a receiving unit 1510 in the distributor function, receive a request adapted to request a subscription to expose IMS exposure data adapted to be related to the UE 121. The request is adapted to originate from the second network node 112 adapted to operate outside of the IMS network 102.

The distributor function may further eb configured to, e.g. by means of the receiving unit 1510 in the distributor function, receive, from the second IMS node 132, the notification adapted to notify the distributor function of the fulfilled triggering occurrence detected by the second IMS node 132. The triggering occurrence is adapted to be related to the UE 121.

The distributor function is further configured to, e.g. by means of an obtaining unit 1520 in the distributor function, obtain, from the locator function, data adapted to identify the second IMS node 132 adapted to support exposure capabilities and serving the UE 121. The locator function is adapted to be comprised in any one out of the first IMS node 131 or the third network node 113.

To obtain data adapted to identify the second IMS node 132, may further be adapted to comprise sending a request for data identifying the second IMS node 132 to the locator function. The request is adapted to comprise the first ID adapted to identify the UE 121, and receive the data adapted to identify the second IMS node 132.

The data adapted to identify the second IMS node 132 may be adapted to comprise any one or more out of the second ID adapted to identify the second IMS node 132, and the address of the second IMS node 132.

The distributor function is further configured to, e.g. by means of a sending unit 1530 in the distributor function, send to the identified second IMS node 132, a subscription request to expose data related to the UE 121. The subscription request is adapted to instruct the second IMS node 132 to notify the network exposure function of a triggering occurrence fulfilling a triggering condition, to expose exposure data, when detected by the second IMS node 132. The network exposure function is adapted to be located in the first network node 111. The notification is adapted to enable the network exposure function to notify the second network node 112 of the detected triggering occurrence.

The distributor function may further be configured to, e.g. by means of the sending unit 1530 in the distributor function, send the received notification to the second network node 112, thereby exposing the IMS exposure data to the second network node 112. The notification is adapted to be communicated using an SBI.

The subscription request may be adapted to comprise any one or more out of the triggering condition, and the type of exposure data to expose.

Any one or more out of the received subscription request and the sent subscription request may be adapted to be communicated using an SBI.

The notification may be adapted to comprise the exposure data.

The embodiments herein may be implemented through a respective processor or one or more processors, such as the **processor 1540** of a processing circuitry in the distributor function, and/or the node comprising the distributor function, depicted in Figure 15a, together with respective computer program code for performing the functions and actions of the embodiments herein. The program code mentioned above may also be provided as a computer program product, for instance in the form of a data carrier carrying computer program code for performing the embodiments herein when being loaded into the distributor function, and/or the node comprising the distributor function. One such carrier may be in the form of a CD ROM disc. It is however feasible with other data carriers such as a memory stick. The computer program code may furthermore be provided as pure program code on a server and downloaded to the distributor function, and/or the node comprising the distributor function.

The distributor function, and/or the node comprising the distributor function, may further comprise a **memory 1550** comprising one or more memory units. The memory comprises instructions executable by the processor 1540 in the distributor function, and/or the node comprising the distributor function. The memory 1550 is arranged to be used to store e.g. information, messages, indications, subscriber data, data, profile data, service requests, connections, identities, exposure data, notifications, subscription requests, communication data and applications to perform the methods herein when being executed in the distributor function.

In some embodiments, a **computer program 1560** comprises instructions, which when executed by the respective at least one processor 1540, cause the at least one processor 1540 of the distributor function, and/or the node comprising the distributor function, to perform the actions above.

In some embodiments, a respective **carrier 1570** comprises the respective computer program 1560, wherein the carrier 1570 is one of an electronic signal, an optical signal, an electromagnetic signal, a magnetic signal, an electric signal, a radio signal, a microwave signal, or a computer-readable storage medium.

Those skilled in the art will appreciate that the units in the distributor function described above may refer to a combination of analog and digital circuits, and/or one or more processors configured with software and/or firmware, e.g. stored in the distributor function, and/or the node comprising the distributor function, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

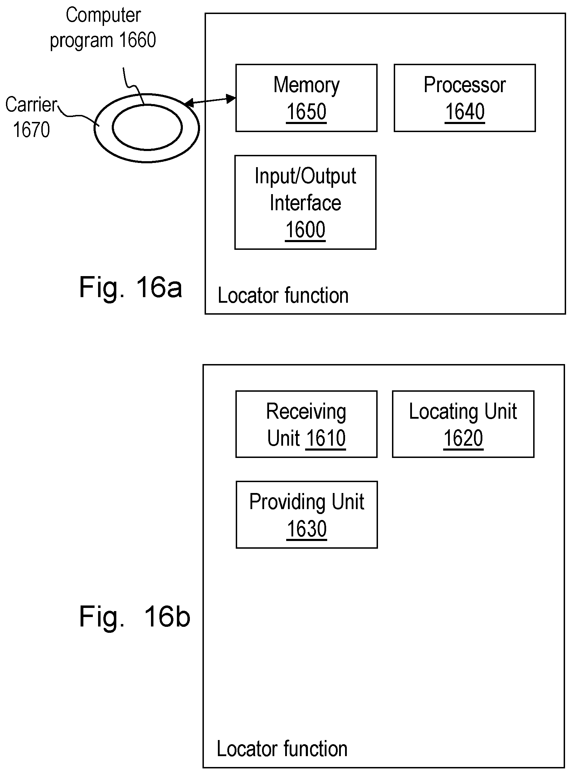

To perform the method actions, the locator function, and/or the node comprising the locator function, may comprise an arrangement depicted in **Figure 16a** **and** b. The locator function configured to handle a subscription to expose IMS exposure data in the communications network 100. The exposure data adapted to be is related to a UE 121 connected to the IMS network 102 comprised in the communications network 100. The locator function is adapted to be comprised in any one out of the first IMS node 131 or the third network node 113.

The locator function, and/or the node comprising the locator function, may comprise an **input and output interface1600** configured to communicate with e.g. the first UE 121, the first network node 111, the second network node 112, the third network node 113, the first IMS node 131 and the second IMS node 132, and with network nodes in the communications network 100 and the IMS network 102.

The locator function is further configured to, e.g. by means of a receiving unit 1610 in the locator function, receive, from the second IMS node 132, mapping information adapted to be related to a registration of the UE 121 in the second IMS node 132.

The mapping information may be adapted to comprise any of or more out of the first ID adapted to identify the UE 121, the second ID adapted to identify the second IMS node 132, and the address of the second IMS node 132.

The mapping information may be adapted to be received over an SBI.

The locator function is further configured to, e.g. by means of a locating unit 1620 in the locator function, upon request from the distributor function, locate data adapted to identify the second IMS node 132 serving the UE 121 based on the mapping information. The distributor function is adapted to be comprised in any one out of the first network node 111 or the first IMS node 131.

To locate the data adapted to identify the second IMS node 132, may further be adapted to comprise to receive a request from the distributor function. The request may be adapted to comprise the first ID adapted to identify the UE 121.

The locator function is further configured to, e.g. by means of a providing unit 1630 in the locator function, provide, to the distributor function, the data adapted to identify the second IMS node 132 serving the UE 121. The data adapted to identify the second IMS node 132 is adapted to enable the distributor function to send the subscription request, to the second IMS node 132, to expose data related to the UE 121. The subscription request is adapted to instruct the second IMS node 132 to notify the network exposure function of the triggering occurrence fulfilling the triggering condition, to expose exposure data, when detected by the second IMS node 132. The network exposure function is adapted to be located in the first network node 111.

To provide the data adapted to identify the second IMS node 132 may further be adapted to comprise send the data adapted to identify the second IMS node 132 to the distributor function. The data adapted to identify the second IMS node 132 may be adapted to comprise any one or more out of the second ID adapted to identify the second IMS node 132 and the address of the second IMS node 132.

The embodiments herein may be implemented through a respective processor or one or more processors, such as the **processor 1640** of a processing circuitry in the locator function, and/or the node comprising the locator function, depicted in Figure 16a, together with respective computer program code for performing the functions and actions of the embodiments herein. The program code mentioned above may also be provided as a computer program product, for instance in the form of a data carrier carrying computer program code for performing the embodiments herein when being loaded into the locator function, and/or the node comprising the locator function. One such carrier may be in the form of a CD ROM disc. It is however feasible with other data carriers such as a memory stick. The computer program code may furthermore be provided as pure program code on a server and downloaded to the locator function, and/or the node comprising the locator function.

The locator function, and/or the node comprising the locator function, may further comprise a **memory 1650** comprising one or more memory units. The memory comprises instructions executable by the processor 1640 in the locator function, and/or the node comprising the locator function. The memory 1650 is arranged to be used to store e.g. information, messages, indications, subscriber data, data, profile data, service requests, connections, identities, exposure data, notifications, subscription requests, mapping data, communication data and applications to perform the methods herein when being executed in the locator function.

In some embodiments, a **computer program 1660** comprises instructions, which when executed by the respective at least one processor 1640, cause the at least one processor 1660 of the locator function, and/or the node comprising the locator function, to perform the actions above.

In some embodiments, a respective **carrier 1670** comprises the respective computer program 1660, wherein the carrier 1670 is one of an electronic signal, an optical signal, an electromagnetic signal, a magnetic signal, an electric signal, a radio signal, a microwave signal, or a computer-readable storage medium.

Those skilled in the art will appreciate that the units in the locator function described above may refer to a combination of analog and digital circuits, and/or one or more processors configured with software and/or firmware, e.g. stored in the locator function, and/or the node comprising the locator function, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

### Further Extensions and Variations

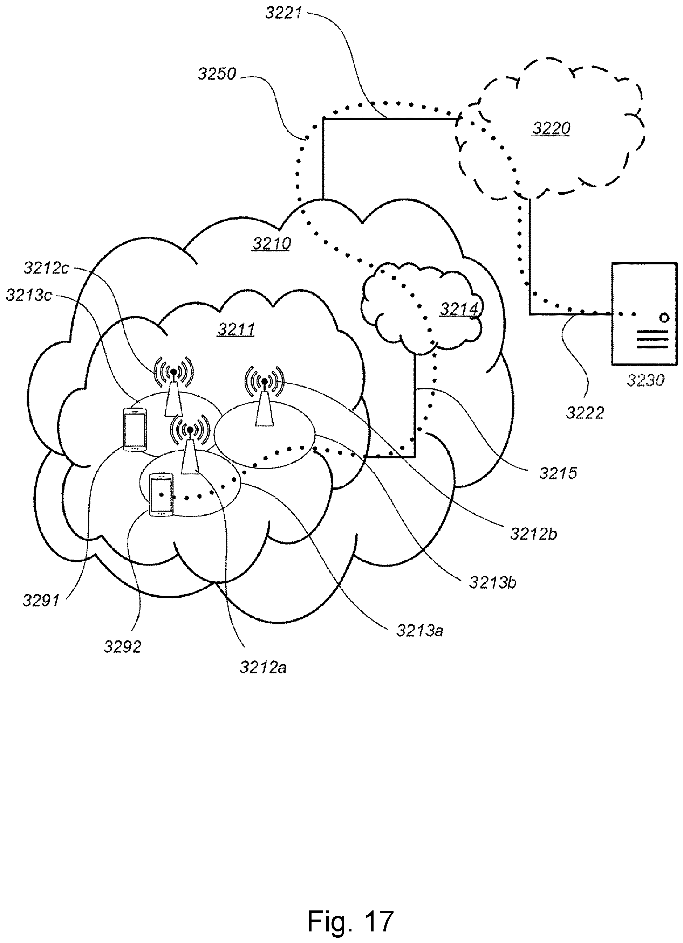

With reference to **Figure 17****,** in accordance with an embodiment, a communication system includes a telecommunication network 3210, such as a 3GPP-type cellular network, which comprises an access network 3211, such as a radio access network, and a core network 3214. The core network 3214 may e.g. comprise the first network node 111, the second network node 112 and the third network node 113. The core network 3214 may further comprise an IMS network, such as the IMS network 102, which may e.g., comprise the first IMS node 131 and the second IMS node 132. 133The access network 3211 comprises a plurality of base stations 3212a, 3212b, 3212c, e.g. the base station 105, such as AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as the UE 121 and/or a Non-AP STA 3291 located in coverage area 3213c is configured to wirelessly connect to, or be paged by, the corresponding base station 3212c. A second UE 3292 such as another terminal 120 and/or a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 17 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

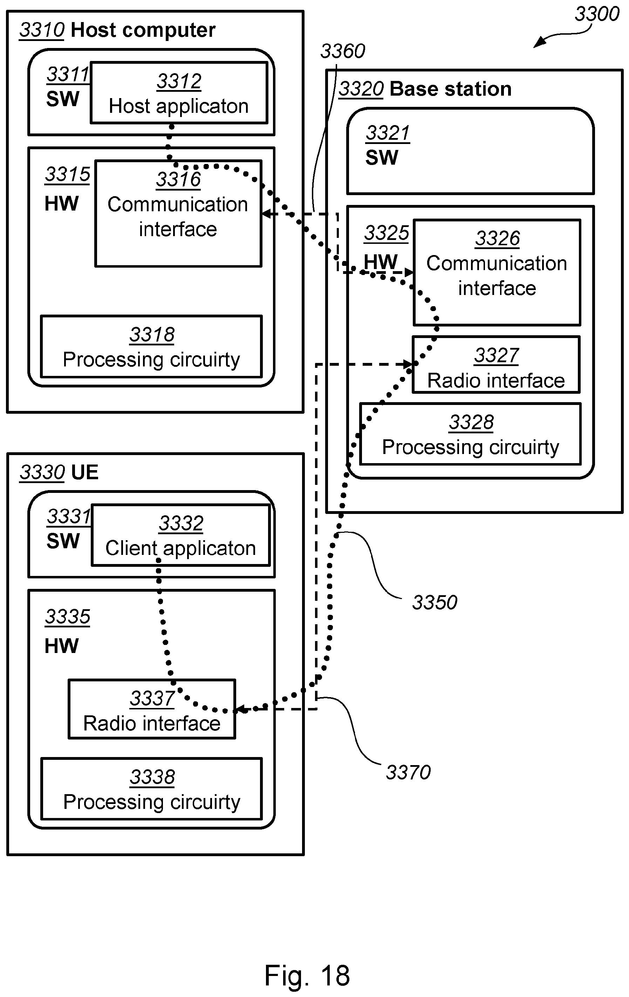

Example implementations, in accordance with an embodiment, of the UE, base station and host computer discussed in the preceding paragraphs will now be described with reference to **Figure 18****.** In a communication system 3300, a host computer 3310 comprises hardware 3315 including a communication interface 3316 configured to setup and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 18) served by the base station 3320. The communication interface 3326 may be configured to facilitate a connection 3360 to the host computer 3310. The connection 3360 may be direct or it may pass through a core network (not shown in Figure 18) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to setup and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides. It is noted that the host computer 3310, base station 3320 and UE 3330 illustrated in Figure 18 may be identical to the host computer 3230, one of the base stations 3212a, 3212b, 3212c and one of the UEs 3291, 3292 of Figure 17, respectively. This is to say, the inner workings of these entities may be as shown in Figure 18 and independently, the surrounding network topology may be that of Figure 17.

In Figure 18, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the [select the applicable **RAN** effect: data rate, latency, power consumption] and thereby provide benefits such as [select the applicable corresponding effect on the **OTT service:** reduced user waiting time, relaxed restriction on file size, better responsiveness, extended battery lifetime].

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

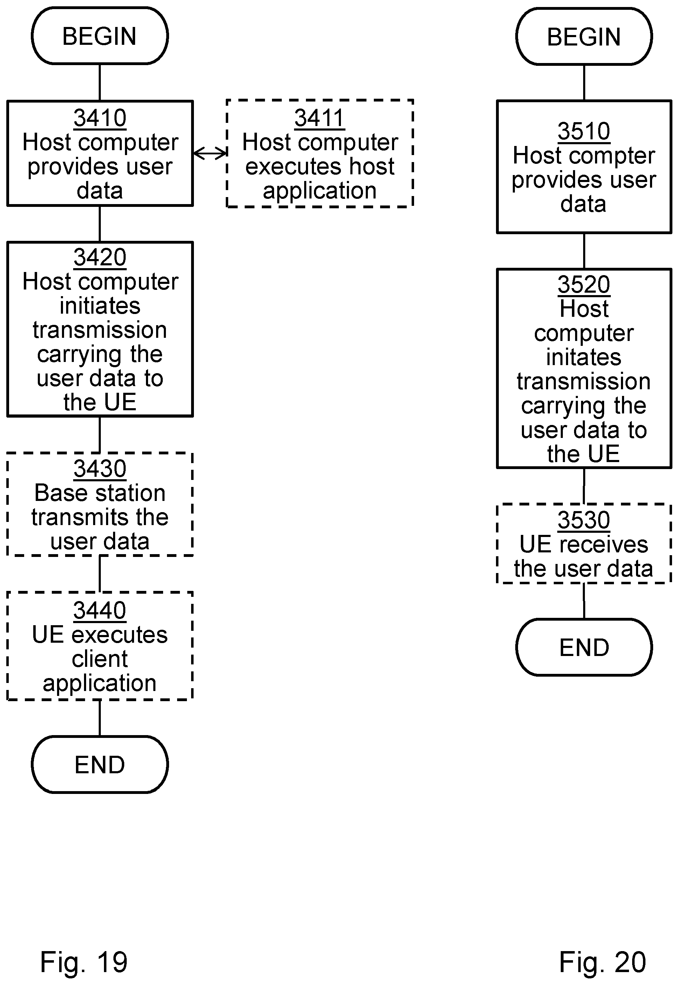

**Figure 19** is a flowchart illustrating a method implemented in a communication system, in accordance with one embodiment. The communication system includes a host computer, a base station such as a AP STA, and a UE such as a Non-AP STA which may be those described with reference to Figure 17 and Figure 18. For simplicity of the present disclosure, only drawing references to Figure 19 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Figure 20** is a flowchart illustrating a method implemented in a communication system, in accordance with one embodiment. The communication system includes a host computer, a base station such as a AP STA, and a UE such as a Non-AP STA which may be those described with reference to Figure 17 and Figure 18. For simplicity of the present disclosure, only drawing references to Figure 20 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

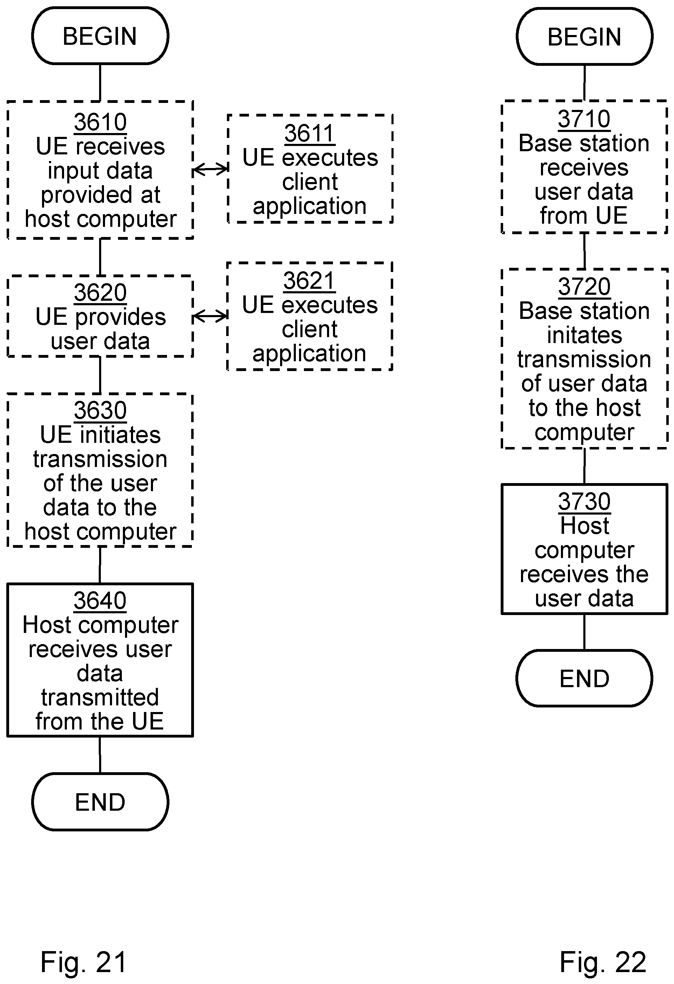

**Figure 21** is a flowchart illustrating a method implemented in a communication system, in accordance with one embodiment. The communication system includes a host computer, a base station such as a AP STA, and a UE such as a Non-AP STA which may be those described with reference to Figure 17 and Figure 18. For simplicity of the present disclosure, only drawing references to Figure 21 will be included in this section. In an optional first step 3610 of the method, the UE receives input data provided by the host computer. Additionally, or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Figure 22** is a flowchart illustrating a method implemented in a communication system, in accordance with one embodiment. The communication system includes a host computer, a base station such as an AP STA, and a UE such as a Non-AP STA which may be those described with reference to Figure 17 and Figure 18. For simplicity of the present disclosure, only drawing references to Figure 22 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

When using the word "comprise" or "comprising" it shall be interpreted as non-limiting, i.e. meaning "consist at least of".

## Claims

1. A method performed by a distributor function for handling a subscription to expose Internet protocol Multimedia Subsystem, IMS, exposure data in a communications network (100), which exposure data is related to a User Equipment, UE, (121) connected to an IMS network (102) comprised in the wireless communications network (100), wherein the distributor function is comprised in any one out of: a first network node (111) or a first IMS node (131), the method comprising:
*receiving* (1001), via a first Service Based Interface, SBI, a request requesting a subscription to expose IMS exposure data related to the UE (121), which request is originating from a second network node (112), operating outside of the IMS network (102),
*obtaining* (1002), from a locator function, data identifying a second IMS node (132) supporting exposure capabilities and serving the UE (121), which locator function is comprised in any one out of: the first IMS node (131) or a third network node (113), and
*sending* (1003), via a second SBI, to the identified second IMS node (132), a subscription request to expose data related to the UE (121), which subscription request instructs the second IMS node (132) to notify a network exposure function, via a third SBI, of a triggering occurrence fulfilling a triggering condition, to expose exposure data, when detected by the second IMS node (132), which network exposure function is located in the first network node (111),
wherein the notification enables the network exposure function to notify the second network node (112) of the detected triggering occurrence.

2. The method according to claim 1, further comprising:
*receiving* (1004), from the second IMS node (132), a notification notifying the distributor function of the fulfilled triggering occurrence detected by the second IMS node (132), which triggering occurrence is related to the UE (121),
*sending* (1005) the received notification to the second network node (112), thereby exposing the IMS exposure data to the second network node (112), and
wherein the notification is communicated using a forth SBI.

3. The method according to any of claims 1-2, wherein *obtaining* (1002) data identifying the second IMS node (132), further comprises *sending* a request for data identifying the second IMS node (132) to the locator function, which request comprises a first identity, ID, identifying the UE (121), and receiving the data identifying the second IMS node (132), wherein the data identifying the second IMS node (132) comprises any one or more out of:
- a second ID identifying the second IMS node (132), and
- an address of the second IMS node (132).

4. The method according to any of claims 1-3, wherein the subscription request comprises any one or more out of:
- the triggering condition, and
- a type of exposure data to expose.

5. The method according to any of claims 1-4, wherein the notification comprises the exposure data.

6. A computer program (1560) comprising instructions, which when executed by a processor (1540), causes the processor (1540) to perform actions according to any of the claims 1-5.

7. A carrier (1570) comprising the computer program (1560) of claim 6, wherein the carrier (1570) is one of an electronic signal, an optical signal, an electromagnetic signal, a magnetic signal, an electric signal, a radio signal, a microwave signal, or a computer-readable storage medium.

8. A method performed by a locator function for handling a subscription to expose Internet protocol Multimedia Subsystem, IMS, exposure data in a wireless communications network (100), which exposure data is related to a User Equipment, UE, (121) connected to an IMS network (102) comprised in the wireless communications network (100), wherein the locator function is comprised in any one out of: a first IMS node (131) or a third network node (113), the method comprising:
*receiving* (1101), via a first Service Based Interface, SBI, from a second IMS node (132), mapping information related to a registration of the UE (121) in the second IMS node (132),
upon request from a distributor function, which distributor function is comprised in any one out of: a first network node (111) or the first IMS node (131), *locating* (1102) data identifying the second IMS node (132) serving the UE (121) based on the mapping information, and
*providing* (1103), to the distributor function, the data identifying the second IMS node (132) serving the UE (121),
wherein the data identifying the second IMS node (132) enables the distributor function to *send* a subscription request, to the second IMS node (132), to expose data related to the UE (121), which subscription request instructs the second IMS node (132) to notify a network exposure function, via a third SBI of a triggering occurrence fulfilling a triggering condition, to expose exposure data, when detected by the second IMS node (132), which network exposure function is located in the first network node (111).

9. The method according to claim 8, wherein *locating* (1102) data identifying the second IMS node (132), further comprises *receiving* a request from the distributor function, which request comprises a first identity, ID, identifying the UE (121), and
wherein *providing* (1103) the data identifying the second IMS node (132) further comprises *sending* the data identifying the second IMS node (132) to the distributor function, wherein the data identifying the second IMS node (132) comprises any one or more out of:
- a second ID identifying the second IMS node (132), and
- an address of the second IMS node (132).

10. The method according to any of claims 8-9, wherein the mapping information comprises any of or more out of:
- the first ID of the UE (121),
- the second ID of the second IMS node (132),
- the address of the second IMS node (132).

11. A computer program (1660) comprising instructions, which when executed by a processor (1640), causes the processor (1640) to perform actions according to any of the claims 8-10.

12. A carrier (1670) comprising the computer program (1660) of claim 11, wherein the carrier (1670) is one of an electronic signal, an optical signal, an electromagnetic signal, a magnetic signal, an electric signal, a radio signal, a microwave signal, or a computer-readable storage medium.

13. A distributor function configured to handle a subscription to expose Internet protocol Multimedia Subsystem, IMS, exposure data in a communications network (100), which exposure data is adapted to be related to a User Equipment, UE, (121) connected to an IMS network (102) adapted to be comprised in the communications network (100), wherein the distributor function is adapted to be comprised in any one out of: a first network node (111) or a first IMS node (131), the distributor function further being configured to:
*receive,* via a first Service Based Interface, SBI, a request adapted to request a subscription to expose IMS exposure data adapted to be related to the UE (121), which request is adapted to originate from a second network node (112) adapted to operate outside of the IMS network (102),
*obtain,* from a locator function, data adapted to identify a second IMS node (132) adapted to support exposure capabilities and serving the UE (121), which locator function is adapted to be comprised in any one out of: the first IMS node (131) or a third network node (113), and
*send,* via a second SBI, to the identified second IMS node (132), a subscription request to expose data related to the UE (121), which subscription request is adapted to instruct the second IMS node (132) to notify a network exposure function, via a third SBI, of a triggering occurrence fulfilling a triggering condition, to expose exposure data, when detected by the second IMS node (132), which network exposure function is adapted to be located in the first network node (111),
wherein the notification is adapted to enable the network exposure function to notify the second network node (112) of the detected triggering occurrence.

14. The distributor function according to claim 13, further being configured to:
*receive,* from the second IMS node (132), a notification adapted to notify the distributor function of the fulfilled triggering occurrence detected by the second IMS node (132), which triggering occurrence is adapted to be related to the UE (121),
*send* the received notification to the second network node (112), thereby exposing the IMS exposure data to the second network node (112), and
wherein the notification is adapted to be communicated using a forth SBI.

15. A locator function configured to handle a subscription to expose Internet protocol Multimedia Subsystem, IMS, exposure data in a communications network (100), which exposure data adapted to be is related to a User Equipment, UE, (121) connected to an IMS network (102) comprised in the communications network (100), wherein the locator function is adapted to be comprised in any one out of: a first IMS node (131) or a third network node (113), the locator function further being configured to:
*receive,* via a first Service Based Interface, SBI, from a second IMS node (132), mapping information adapted to be related to a registration of the UE (121) in the second IMS node (132),
upon request from a distributor function, which distributor function is adapted to be comprised in any one out of: a first network node (111) or the first IMS node (131), *locate* data adapted to identify the second IMS node (132) serving the UE (121) based on the mapping information, and
*provide,* to the distributor function, the data adapted to identify the second IMS node (132) serving the UE (121),
wherein the data adapted to identify the second IMS node (132) is adapted to enable the distributor function to *send* a subscription request, to the second IMS node (132), to expose data related to the UE (121), which subscription request is adapted to instruct the second IMS node (132) to notify a network exposure function, via a third SBI, of a triggering occurrence fulfilling a triggering condition, to expose exposure data, when detected by the second IMS node (132), which network exposure function is adapted to be located in the first network node (111).

## Patentansprüche

1. Verfahren, das von einer Verteilerfunktion durchgeführt wird, zur Handhabung eines Abonnements zur Darlegung von Internetprotokoll-Multimedia-Subsystem-Darlegungsdaten, IMS-Darlegungsdaten, in einem Kommunikationsnetzwerk (100), wobei die Darlegungsdaten mit einer Benutzereinrichtung, UE, (121) in Beziehung stehen, die mit einem IMS-Netzwerk (102) verbunden ist, das in dem drahtlosen Kommunikationsnetzwerk (100) umfasst ist, wobei die Verteilerfunktion in einem von Folgenden umfasst ist: einem ersten Netzwerkknoten (111) oder einem ersten IMS-Knoten (131), wobei das Verfahren Folgendes umfasst:
Empfangen (1001) einer Anforderung, die ein Abonnement zur Darlegung von IMS-Darlegungsdaten in Bezug auf die UE (121) anfordert, über eine erste dienstbasierte Schnittstelle, SBI, wobei die Anforderung von einem zweiten Netzwerkknoten (112) abgeht, der außerhalb des IMS-Netzwerks (102) operiert,
Erhalten (1002) von Daten, die einen zweiten IMS-Knoten (132) identifizieren, der Darlegungsfähigkeiten unterstützt und die UE (121) bedient, von einer Suchfunktion, wobei die Suchfunktion in einem von Folgenden umfasst ist; dem ersten IMS-Knoten (131) oder einem dritten Netzwerkknoten (113), und
Senden (1003) einer Abonnementanforderung zur Darlegung von Daten in Bezug auf die UE (121) über eine zweite SBI an den identifizierten zweiten IMS-Knoten (132), wobei die Abonnementanforderung den zweiten IMS-Knoten (132) anweist, eine Netzwerkdarlegungsfunktion über eine dritte SBI von einem Auslöseereignis zu benachrichtigen, das eine Auslösebedingung erfüllt, um Darlegungsdaten darzulegen, wenn vom zweiten IMS-Knoten (132) erkannt wird, welche Netzwerkdarlegungsfunktion sich im ersten Netzwerkknoten (111) befindet,
wobei die Benachrichtigung der Netzwerkdarlegungsfunktion ermöglicht, den zweiten Netzwerkknoten (112) von dem erkannten Auslöseereignis zu benachrichtigen.

2. Verfahren nach Anspruch 1, ferner umfassend:
Empfangen (1004) einer Benachrichtigung vom zweiten IMS-Knoten (132), die die Verteilerfunktion von dem erfüllten Auslöseereignis benachrichtigt, das vom zweiten IMS-Knoten (132) erkannt wurde, wobei das Auslöseereignis mit der UE (121) in Beziehung steht,
Senden (1005) der empfangenen Benachrichtigung an den zweiten Netzwerkknoten (112), um dadurch die IMS-Darlegungsdaten für den zweiten Netzwerkknoten (112) darzulegen, und
wobei die Benachrichtigung unter Verwendung einer vierten SBI kommuniziert wird.

3. Verfahren nach einem der Ansprüche 1-2, wobei das Erhalten (1002) von Daten, die den zweiten IMS-Knoten (132) identifizieren, ferner Senden einer Anforderung für Daten, die den zweiten IMS-Knoten (132) identifizieren, an die Suchfunktion, wobei die Anforderung eine erste Identität, ID, umfasst, die die UE (121) identifiziert, und Empfangen der Daten umfasst, die den zweiten IMS-Knoten (132) identifizieren, wobei die Daten, die den zweiten IMS-Knoten (132) identifizieren, eines oder mehrere von Folgenden umfassen:
- eine zweite ID, die den zweiten IMS-Knoten (132) identifiziert, und
- eine Adresse des zweiten IMS-Knotens (132).

4. Verfahren nach einem der Ansprüche 1-3, wobei die Abonnementanforderung eine oder mehrere von Folgenden umfasst:
- die Auslösebedingung und
- einen Typ der darzulegenden Darlegungsdaten.

5. Verfahren nach einem der Ansprüche 1-4, wobei die Benachrichtigung die Darlegungsdaten umfasst.

6. Computerprogramm (1560), umfassend Anweisungen, die bei Ausführung durch einen Prozessor (1540) den Prozessor (1540) zum Durchführen von Vorgängen nach einem der Ansprüche 1 bis 5 veranlassen.

7. Datenträger (1570), umfassend das Computerprogramm (1560) nach Anspruch 6, wobei der Datenträger (1570) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

8. Verfahren, das von einer Suchfunktion durchgeführt wird, zur Handhabung eines Abonnements zur Darlegung von Internetprotokoll-Multimedia-Subsystem-Darlegungsdaten, IMS-Darlegungsdaten, in einem drahtlosen Kommunikationsnetzwerk (100), wobei die Darlegungsdaten mit einer Benutzereinrichtung, UE, (121) in Beziehung stehen, die mit einem IMS-Netzwerk (102) verbunden ist, das in dem drahtlosen Kommunikationsnetzwerk (100) umfasst ist, wobei die Suchfunktion in einem von Folgenden umfasst ist: einem ersten IMS-Knoten (131) oder einem dritten Netzwerkknoten (113), wobei das Verfahren Folgendes umfasst:
Empfangen (1101) von Zuordnungsinformationen in Bezug auf eine Registrierung der UE (121) bei einem zweiten IMS-Knoten (132) vom zweiten IMS-Knoten (132) über eine erste dienstbasierte Schnittstelle, SBI,
bei Anforderung von einer Verteilerfunktion, wobei die Verteilerfunktion in einem von Folgenden umfasst ist: einem ersten Netzwerkknoten (111) oder dem ersten IMS-Knoten (131), Lokalisieren (1102) von Daten, die den zweiten IMS-Knoten (132) identifizieren, der die UE (121) bedient, basierend auf den Zuordnungsinformationen, und
Bereitstellen (1103) der Daten, die den zweiten IMS-Knoten (132) identifizieren, der die UE (121) bedient, an die Verteilerfunktion,
wobei die Daten, die den zweiten IMS-Knoten (132) identifizieren, der Verteilerfunktion ermöglichen, eine Abonnementanforderung zur Darlegung von Daten in Bezug auf die UE (121) an den zweiten IMS-Knoten (132) zu senden, wobei die Abonnementanforderung den zweiten IMS-Knoten (132) anweist, eine Netzwerkdarlegungsfunktion über eine dritte SBI von einem Auslöseereignis zu benachrichtigen, das eine Auslösebedingung erfüllt, um Darlegungsdaten darzulegen, wenn vom zweiten IMS-Knoten (132) erkannt wird, welche Netzwerkdarlegungsfunktion sich im ersten Netzwerkknoten (111) befindet.

9. Verfahren nach Anspruch 8, wobei das Lokalisieren (1102) der Daten, die den zweiten IMS-Knoten (132) identifizieren, ferner Empfangen einer Anforderung von der Verteilerfunktion umfasst, wobei die Anforderung eine erste Identität, ID, umfasst, die die UE (121) identifiziert, und
wobei das Bereitstellen (1103) der Daten, die den zweiten IMS-Knoten (132) identifizieren, ferner Senden der Daten, die den zweiten IMS-Knoten (132) identifizieren, an die Verteilerfunktion umfasst, wobei die Daten, die den zweiten IMS-Knoten (132) identifizieren, eines oder mehrere von Folgenden umfassen:
- eine zweite ID, die den zweiten IMS-Knoten (132) identifiziert, und
- eine Adresse des zweiten IMS-Knotens (132).

10. Verfahren nach einem der Ansprüche 8-9, wobei die Zuordnungsinformationen eines oder mehrere von Folgenden umfassen:
- die erste ID der UE (121),
- die zweite ID des zweiten IMS-Knotens (132),
- die Adresse des zweiten IMS-Knotens (132).

11. Computerprogramm (1660), umfassend Anweisungen, die bei Ausführung durch einen Prozessor (1640) den Prozessor (1640) zum Durchführen von Vorgängen nach einem der Ansprüche 8 bis 10 veranlassen.

12. Datenträger (1670), umfassend das Computerprogramm (1660) nach Anspruch 11, wobei der Datenträger (1670) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

13. Verteilerfunktion, die zum Handhaben eines Abonnements zur Darlegung von Internetprotokoll-Multimedia-Subsystem-Darlegungsdaten, IMS-Darlegungsdaten, in einem Kommunikationsnetzwerk (100) konfiguriert ist, wobei die Darlegungsdaten so ausgelegt sind, dass sie mit einer Benutzereinrichtung, UE, (121) in Beziehung stehen, die mit einem IMS-Netzwerk (102) verbunden ist, das so ausgelegt ist, dass es in dem drahtlosen Kommunikationsnetzwerk (100) umfasst ist, wobei die Verteilerfunktion so ausgelegt ist, dass sie in einem von Folgenden umfasst ist: einem ersten Netzwerkknoten (111) oder einem ersten IMS-Knoten (131), wobei die Verteilerfunktion ferner zu Folgendem konfiguriert ist:
Empfangen einer Anforderung, die so ausgelegt ist, dass sie ein Abonnement zur Darlegung von IMS-Darlegungsdaten anfordert, die so ausgelegt sind, dass sie mit der UE (121) in Beziehung stehen, über eine erste dienstbasierte Schnittstelle, SBI, wobei die Anforderung so ausgelegt ist, dass sie von einem zweiten Netzwerkknoten (112) abgeht, der so ausgelegt ist, dass er außerhalb des IMS-Netzwerks (102) operiert,
Erhalten von Daten, die so ausgelegt sind, dass sie einen zweiten IMS-Knoten (132) identifizieren, der so ausgelegt ist, dass er Darlegungsfähigkeiten unterstützt und die UE (121) bedient, von einer Suchfunktion, wobei die Suchfunktion so ausgelegt ist, dass sie in einem von Folgenden umfasst ist; dem ersten IMS-Knoten (131) oder einem dritten Netzwerkknoten (113), und
Senden einer Abonnementanforderung zur Darlegung von Daten in Bezug auf die UE (121) über eine zweite SBI an den identifizierten zweiten IMS-Knoten (132), wobei die Abonnementanforderung so ausgelegt ist, dass sie den zweiten IMS-Knoten (132) anweist, eine Netzwerkdarlegungsfunktion über eine dritte SBI von einem Auslöseereignis zu benachrichtigen, das eine Auslösebedingung erfüllt, um Darlegungsdaten darzulegen, wenn vom zweiten IMS-Knoten (132) erkannt wird, welche Netzwerkdarlegungsfunktion so ausgelegt ist, dass sie sich im ersten Netzwerkknoten (111) befindet,
wobei die Benachrichtigung so ausgelegt ist, dass sie der Netzwerkdarlegungsfunktion ermöglicht, den zweiten Netzwerkknoten (112) von dem erkannten Auslöseereignis zu benachrichtigen.

14. Verteilerfunktion nach Anspruch 13, die ferner zu Folgendem konfiguriert ist:
Empfangen einer Benachrichtigung vom zweiten IMS-Knoten (132), die so ausgelegt ist, dass sie die Verteilerfunktion von dem erfüllten Auslöseereignis benachrichtigt, das vom zweiten IMS-Knoten (132) erkannt wurde, wobei das Auslöseereignis so ausgelegt ist, dass es mit der UE (121) in Beziehung steht,
Senden der empfangenen Benachrichtigung an den zweiten Netzwerkknoten (112), um dadurch die IMS-Darlegungsdaten für den zweiten Netzwerkknoten (112) darzulegen, und
wobei die Benachrichtigung so ausgelegt ist, dass sie unter Verwendung einer vierten SBI kommuniziert wird.

15. Suchfunktion, die zum Handhaben eines Abonnements zur Darlegung von Internetprotokoll-Multimedia-Subsystem-Darlegungsdaten, IMS-Darlegungsdaten, in einem Kommunikationsnetzwerk (100) konfiguriert ist, wobei die Darlegungsdaten so ausgelegt sind, dass sie mit einer Benutzereinrichtung, UE, (121) in Beziehung stehen, die mit einem IMS-Netzwerk (102) verbunden ist, das so ausgelegt ist, dass es in dem drahtlosen Kommunikationsnetzwerk (100) umfasst ist, wobei die Suchfunktion so ausgelegt ist, dass sie in einem von Folgenden umfasst ist: einem ersten IMS-Knoten (131) oder einem dritten Netzwerkknoten (113), wobei die Suchfunktion ferner zu Folgendem konfiguriert ist:
Empfangen von Zuordnungsinformationen, die so ausgelegt sind, dass sie mit einer Registrierung der UE (121) bei einem zweiten IMS-Knoten (132) in Beziehung stehen, vom zweiten IMS-Knoten (132) über eine erste dienstbasierte Schnittstelle, SBI,
bei Anforderung von einer Verteilerfunktion, wobei die Verteilerfunktion so ausgelegt ist, dass sie in einem von Folgenden umfasst ist: einem ersten Netzwerkknoten (111) oder dem ersten IMS-Knoten (131), Lokalisieren von Daten, die so ausgelegt sind, dass sie den zweiten IMS-Knoten (132) identifizieren, der die UE (121) bedient, basierend auf den Zuordnungsinformationen, und
Bereitstellen der Daten, die so ausgelegt sind, dass sie den zweiten IMS-Knoten (132) identifizieren, der die UE (121) bedient, an die Verteilerfunktion,
wobei die Daten, die so ausgelegt sind, dass sie den zweiten IMS-Knoten (132) identifizieren, so ausgelegt sind, dass sie der Verteilerfunktion ermöglichen, eine Abonnementanforderung zur Darlegung von Daten in Bezug auf die UE (121) an zweiten IMS-Knoten (132) zu senden, wobei die Abonnementanforderung so ausgelegt ist, dass sie den zweiten IMS-Knoten (132) anweist, eine Netzwerkdarlegungsfunktion über eine dritte SBI von einem Auslöseereignis zu benachrichtigen, das eine Auslösebedingung erfüllt, um Darlegungsdaten darzulegen, wenn vom zweiten IMS-Knoten (132) erkannt wird, welche Netzwerkdarlegungsfunktion so ausgelegt ist, dass sie sich im ersten Netzwerkknoten (111) befindet.

## Revendications

1. Procédé réalisé par une fonction distributrice pour gérer un abonnement pour exposer des données d'exposition de sous-système multimédia de protocole Internet, IMS, dans un réseau de communication (100), les données d'exposition étant liées à un équipement utilisateur, UE, (121) connecté à un réseau IMS (102) compris dans le réseau de communication sans fil (100), dans lequel la fonction distributrice est comprise dans l'un quelconque parmi : un premier nœud de réseau (111) et un premier nœud IMS (131), le procédé comprenant :
*la réception* (1001), via une première interface à base de service, SBI, d'une demande demandant un abonnement pour exposer des données d'exposition IMS liées à l'UE (121), la demande émanant d'un deuxième nœud de réseau (112), fonctionnant à l'extérieur du réseau IMS (102),
*l'obtention* (1002), depuis une fonction localisatrice, de données identifiant un deuxième nœud IMS (132) prenant en charge des capacités d'exposition et desservant l'UE (121), la fonction localisatrice étant comprise dans l'un quelconque parmi : le premier nœud IMS (131) et un troisième nœud de réseau (113), et
*l'envoi* (1003), via une deuxième SBI, au deuxième nœud IMS (132) identifié, d'une demande d'abonnement pour exposer des données liées à l'UE (121), la demande d'abonnement instruisant au deuxième nœud IMS (132) de notifier une fonction d'exposition de réseau, via une troisième SBI, d'une occurrence de déclenchement remplissant une condition de déclenchement, pour exposer des données d'exposition, lorsqu'elle est détectée par le deuxième nœud IMS (132), la fonction d'exposition de réseau étant située dans le premier nœud de réseau (111),
dans lequel la notification permet à la fonction d'exposition de réseau de notifier le deuxième nœud de réseau (112) de l'occurrence de déclenchement détectée.

2. Procédé selon la revendication 1, comprenant en outre :
*la réception* (1004), depuis le deuxième nœud IMS (132), d'une notification notifiant la fonction distributrice de l'occurrence de déclenchement remplie détectée par le deuxième nœud IMS (132), l'occurrence de déclenchement étant liée à l'UE (121),
*l'envoi* (1005) de la notification reçue au deuxième nœud de réseau (112), exposant ainsi les données d'exposition IMS au deuxième nœud de réseau (112), et
dans lequel la notification est communiquée à l'aide d'une quatrième SBI.

3. Procédé selon l'une quelconque des revendications 1 et 2, dans lequel *l'obtention* (1002) de données identifiant le deuxième nœud IMS (132), comprend en outre *l'envoi* d'une demande de données identifiant le deuxième nœud IMS (132) à la fonction localisatrice, la demande comprenant une première identité, ID, identifiant l'UE (121), et la réception des données identifiant le deuxième nœud IMS (132), dans lequel les données identifiant le deuxième nœud IMS (132) comprennent l'une quelconque ou plusieurs parmi :
- une deuxième ID identifiant le deuxième nœud IMS (132), et
- une adresse du deuxième nœud IMS (132).

4. Procédé selon l'une quelconque des revendications 1 à 3, dans lequel la demande d'abonnement comprend l'un quelconque ou plusieurs parmi :
- la condition de déclenchement, et
- un type de données d'exposition à exposer.

5. Procédé selon l'une quelconque des revendications 1 à 4, dans lequel la notification comprend les données d'exposition.

6. Programme informatique (1560) comprenant des instructions qui, lorsqu'elles sont exécutées par un processeur (1540), amènent le processeur (1540) à réaliser des actions selon l'une quelconque des revendications 1 à 5.

7. Support (1570) comprenant le programme informatique (1560) selon la revendication 6, dans lequel le support (1570) est l'un parmi un signal électronique, un signal optique, un signal électromagnétique, un signal magnétique, un signal électrique, un signal radio, un signal micro-ondes et un support de stockage lisible par ordinateur.

8. Procédé réalisé par une fonction localisatrice pour gérer un abonnement pour exposer des données d'exposition de sous-système multimédia de protocole Internet, IMS, dans un réseau de communication sans fil (100), les données d'exposition étant liées à un équipement utilisateur, UE, (121) connecté à un réseau IMS (102) compris dans le réseau de communication sans fil (100), dans lequel la fonction localisatrice est comprise dans l'un quelconque parmi : un premier nœud IMS (131) et un troisième nœud de réseau (113), le procédé comprenant :
*la réception* (1101), via une première interface à base de service, SBI, depuis un deuxième nœud IMS (132), d'informations de mappage liées à un enregistrement de l'UE (121) dans le deuxième nœud IMS (132),
lors d'une demande d'une fonction distributrice, la fonction distributrice étant comprise dans l'un quelconque parmi : un premier nœud de réseau (111) et le premier nœud IMS (131), *la localisation* (1102) de données identifiant le deuxième nœud IMS (132) desservant l'UE (121) sur la base des informations de mappage, et
*la fourniture* (1103), à la fonction distributrice, des données identifiant le deuxième nœud IMS (132) desservant l'UE (121),
dans lequel les données identifiant le deuxième nœud IMS (132) permettent à la fonction distributrice d'*envoyer* une demande d'abonnement, au deuxième nœud IMS (132), pour exposer des données liées à l'UE (121), la demande d'abonnement instruisant au deuxième nœud IMS (132) de notifier une fonction d'exposition de réseau, via une troisième SBI, d'une occurrence de déclenchement remplissant une condition de déclenchement, pour exposer des données d'exposition, lorsqu'elle est détectée par le deuxième nœud IMS (132), la fonction d'exposition de réseau étant située dans le premier nœud de réseau (111).

9. Procédé selon la revendication 8, dans lequel *la localisation* (1102) de données identifiant le deuxième nœud IMS (132) comprend en outre *la réception* d'une demande depuis la fonction distributrice, la demande comprenant une première identité, ID, identifiant l'UE (121), et
dans lequel *la fourniture* (1103) des données identifiant le deuxième nœud IMS (132) comprend en outre *l'envoi* des données identifiant le deuxième nœud IMS (132) à la fonction distributrice, dans lequel les données identifiant le deuxième nœud IMS (132) comprennent l'une quelconque ou plusieurs parmi :
- une deuxième ID identifiant le deuxième nœud IMS (132), et
- une adresse du deuxième nœud IMS (132).

10. Procédé selon l'une quelconque des revendications 8 et 9, dans lequel les informations de mappage comprennent l'une quelconque ou plusieurs parmi :
- la première ID de l'UE (121),
- la deuxième ID du deuxième nœud IMS (132),
- l'adresse du deuxième nœud IMS (132).

11. Programme informatique (1660) comprenant des instructions qui, lorsqu'elles sont exécutées par un processeur (1640), amènent le processeur (1640) à réaliser des actions selon l'une quelconque des revendications 8 à 10.

12. Support (1670) comprenant le programme informatique (1660) selon la revendication 11, dans lequel le support (1670) est l'un parmi un signal électronique, un signal optique, un signal électromagnétique, un signal magnétique, un signal électrique, un signal radio, un signal micro-ondes et un support de stockage lisible par ordinateur.

13. Fonction distributrice configurée pour gérer un abonnement pour exposer des données d'exposition de sous-système multimédia de protocole Internet, IMS, dans un réseau de communication (100), les données d'exposition étant adaptées pour être liées à un équipement utilisateur, UE, (121) connecté à un réseau IMS (102) adapté pour être compris dans le réseau de communication (100), dans laquelle la fonction distributrice est adaptée pour être comprise dans l'un quelconque parmi : un premier nœud de réseau (111) et un premier nœud IMS (131), la fonction distributrice étant en outre configurée pour :
*recevoir*, via une première interface à base de service, SBI, une demande adaptée pour demander un abonnement pour exposer des données d'exposition IMS adaptées pour être liées à l'UE (121), la demande étant adaptée pour émaner d'un deuxième nœud de réseau (112) adapté pour fonctionner à l'extérieur du réseau IMS (102),
*obtenir*, depuis une fonction localisatrice, des données adaptées pour identifier un deuxième nœud IMS (132) adapté pour prendre en charge des capacités d'exposition et desservant l'UE (121), la fonction localisatrice étant adaptée pour être comprise dans l'un quelconque parmi : le premier nœud IMS (131) et un troisième nœud de réseau (113), et
*envoyer*, via une deuxième SBI, au deuxième nœud IMS (132) identifié, une demande d'abonnement pour exposer des données liées à l'UE (121), la demande d'abonnement étant adaptée pour instruire au deuxième nœud IMS (132) de notifier une fonction d'exposition de réseau, via une troisième SBI, d'une occurrence de déclenchement remplissant une condition de déclenchement, pour exposer des données d'exposition, lorsqu'elle est détectée par le deuxième nœud IMS (132), la fonction d'exposition de réseau étant adaptée pour être située dans le premier nœud de réseau (111),
dans laquelle la notification est adaptée pour permettre à la fonction d'exposition de réseau de notifier le deuxième nœud de réseau (112) de l'occurrence de déclenchement détectée.

14. Fonction distributrice selon la revendication 13, étant en outre configurée pour :
*recevoir*, depuis le deuxième nœud IMS (132), une notification adaptée pour notifier la fonction distributrice de l'occurrence de déclenchement remplie détectée par le deuxième nœud IMS (132), l'occurrence de déclenchement étant adaptée pour être liée à l'UE (121),
*envoyer* la notification reçue au deuxième nœud de réseau (112), exposant ainsi les données d'exposition IMS au deuxième nœud de réseau (112), et
dans laquelle la notification est adaptée pour être communiquée à l'aide d'une quatrième SBI.

15. Fonction localisatrice configurée pour gérer un abonnement pour exposer des données d'exposition de sous-système multimédia de protocole Internet, IMS, dans un réseau de communication (100), les données d'exposition étant adaptées pour être liées à un équipement utilisateur, UE, (121) connecté à un réseau IMS (102) compris dans le réseau de communication (100), dans laquelle la fonction localisatrice est adaptée pour être comprise dans l'un quelconque parmi : un premier nœud IMS (131) et un troisième nœud de réseau (113), la fonction localisatrice étant en outre configurée pour :
*recevoir*, via une première interface à base de service, SBI, depuis un deuxième nœud IMS (132), des informations de mappage adaptées pour être liées à un enregistrement de l'UE (121) dans le deuxième nœud IMS (132),
lors d'une demande d'une fonction distributrice, la fonction distributrice étant adaptée pour être comprise dans l'un quelconque parmi : un premier nœud de réseau (111) et le premier nœud IMS (131), *localiser* des données adaptées pour identifier le deuxième nœud IMS (132) desservant l'UE (121) sur la base des informations de mappage, et
*fournir*, à la fonction distributrice, les données adaptées pour identifier le deuxième nœud IMS (132) desservant l'UE (121),
dans laquelle les données adaptées pour identifier le deuxième nœud IMS (132) sont adaptées pour permettre à la fonction distributrice d'*envoyer* une demande d'abonnement, au deuxième nœud IMS (132), pour exposer des données liées à l'UE (121), la demande d'abonnement étant adaptée pour instruire au deuxième nœud IMS (132) de notifier une fonction d'exposition de réseau, via une troisième SBI, d'une occurrence de déclenchement remplissant une condition de déclenchement, pour exposer des données d'exposition, lorsqu'elle est détectée par le deuxième nœud IMS (132), la fonction d'exposition de réseau étant adaptée pour être située dans le premier nœud de réseau (111).
